(19) Europäisches Patentamt
European Patent Office
Office européen des brevets

(11) **EP 4 319 263 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
*H04W 24/08* (2009.01)    *H04W 56/00* (2009.01)
*H04W 68/12* (2009.01)

(21) Application number: **22780126.3**

(22) Date of filing: **16.03.2022**

(52) Cooperative Patent Classification (CPC):
**H04W 24/08; H04W 56/00; H04W 68/12**

(86) International application number:
**PCT/JP2022/011987**

(87) International publication number:
**WO 2022/209906 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021   JP 2021058630**

(71) Applicants:
• **DENSO CORPORATION
  Kariya-city, Aichi 448-8661 (JP)**

• **TOYOTA JIDOSHA KABUSHIKI KAISHA
  Toyota-shi
  Aichi 471-8571 (JP)**

(72) Inventors:
• **NAGANO, Tatsuki
  Kariya-city, Aichi 4488661 (JP)**
• **YAMAMOTO, Tomoyuki
  Kariya-city, Aichi 4488661 (JP)**

(74) Representative: **TBK
  Bavariaring 4-6
  80336 München (DE)**

(54)    **USER EQUIPMENT, BASE STATION, AND COMMUNICATION CONTROL METHOD**

(57)    A user equipment (100) is configured to communicate with a plurality of networks (200A, 200B) using a plurality of subscriber identity modules (111, 112), the user equipment communicates with a base station (210A) of a first network (200A). The user equipment (100) performs inter-network measurement for measuring a difference in system frame number and a difference in frame timing between the first network (200A) and a second network (200B). The user equipment (100) transmits a radio resource control (RRC) message including a difference measurement result obtained by the inter-network measurement to the base station (210A).

FIG. 1

EP 4 319 263 A1

**Description**

Cross-Reference to Related Applications

The present application is based on and claims the benefit of priority of Japanese Patent Application No. 2021-058630, filed on March 30, 2021, the entire contents of which are incorporated herein by reference.

Technical Field

The present disclosure relates to a user equipment, a base station, and a communication control method that are used in a mobile communication system.

Background Art

In Release 17 of the 3rd generation partnership project (3GPP), which is a mobile communication system standardization project, a work item has been launched for a user equipment equipped with a plurality of subscriber identity modules to formulate a function of performing data communication while existing in a network of a plurality of communication operators.

Currently, a mechanism in which a user equipment existing in a plurality of networks receives paging (that is, incoming call) is not specified in standard specifications, and depends on implementation of the user equipment. However, in a case where an incoming call is received from one network (hereinafter, "first network") during communication with another network (hereinafter, "second network"), the user equipment overlooks the incoming call. Thus, methods of receiving incoming calls from a plurality of networks in cooperation with each network have been studied in the field of 3GPP standardization (see, for example, Non Patent Literatures 1 to 4).

Non Patent Literatures 1 to 4 describe a method in which, in a case where there is only one receiver (RX) included in a user equipment equipped with a plurality of subscriber identity modules, a first network configures an interruption timing at which communication with the first network can be temporarily interrupted to the user equipment in order for the user equipment to monitor paging of a second network while maintaining connection with the first network. Such interruption timing may be referred to as a "gap".

Citation List

Non Patent Literature

Non Patent Literature 1: 3GPP contributions: R2-2009265, "Scenarios and Impact analysis for Switching Notification"
Non Patent Literature 2: 3GPP contributions: R2-2009557,"Switching between two links for Multi-SIM"
Non Patent Literature 3: 3GPP contributions: R2-2010350,"Discussion on switching mechanism for multi-SIM"
Non Patent Literature 4: 3GPP contributions: R2-2100475,"Discussion on Switching Notification Procedure"

Summary of Invention

In a case where the first network and the second network are asynchronous, that is, when system frame numbers (SFN: System Frame Number) and/or frame timings used by the first network and the second network are not aligned (not aligned), the interruption timing cannot be appropriately configured from the first network to the user equipment. From this, the inventors have found a problem in that it is difficult for the user equipment to monitor paging in the second network while maintaining a connection state (RRC connected state) in a radio resource control (RRC) layer with the first network.

Therefore, an object of the present disclosure is to provide a user equipment, a base station, and a communication control method that facilitate monitoring paging of a second network while maintaining a connection state with a first network in an RRC layer.

In a first aspect, a user equipment is configured to communicate with a plurality of networks using a plurality of subscriber identity modules. The user equipment comprises: a communicator configured to communicate with a base station of a first network included in the plurality of networks; and a controller configured to perform inter-network measurement for measuring a difference in system frame number and a difference in frame timing between the first network and a second network included in the plurality of networks. The communicator transmits a radio resource control (RRC) message including a difference measurement result obtained by the inter-network measurement to the base station.

In a second aspect, a base station of a first network is included in a plurality of networks in a mobile communication system having a user equipment configured to communicate with the plurality of networks using a plurality of subscriber identity modules. The base station comprises: a communicator configured to receive a radio resource control (RRC) message from the user equipment, the RRC message including a difference measurement result obtained by inter-network measurement for measuring a difference in a system frame number and a difference in a frame timing between the first network and the second network included in the plurality of networks; and a controller configured to acquire the difference measurement result included in the RRC message.

In a third aspect, a communication control method is performed by a user equipment configured to communicate with a plurality of networks using a plurality of subscriber identity modules. The communication control method comprises the steps of: communicating with a base station of a first network included in the plurality of networks; performing inter-network measurement for measuring a difference in system frame number and a difference in frame timing between the first network and a second network included in the plurality of networks; and transmitting a radio resource control (RRC) message including a difference measurement result obtained by the inter-network measurement to the base station.

Brief Description of Drawings

The foregoing and other objects, features, and advantages of the present disclosure will become more apparent from the following detailed description with reference to the accompanying drawings. The drawings are as follows.

Fig. 1 is a diagram illustrating a configuration of a mobile communication system according to an embodiment.
Fig. 2 is a diagram illustrating a configuration example of a protocol stack of the mobile communication system according to the embodiment.
Fig. 3 is a diagram illustrating a configuration example of a LTE according to the embodiment.
Fig. 4 is a diagram illustrating a configuration example of a base station of a first network according to the embodiment.
Fig. 5 is a diagram illustrating an operation example of the UE100 in which an interruption timing is configured from the base station of the first network according to the embodiment.
Fig. 6 is a diagram illustrating a first operation example of the mobile communication system according to the embodiment.
Fig. 7 is a diagram illustrating a second operation example of the mobile communication system according to the embodiment.
Fig. 8 is a diagram illustrating a third operation example of the mobile communication system according to the embodiment.
Fig. 9 is a diagram illustrating an example of a measurement object information element included in configuration information according to the embodiment.
Fig. 10 is a diagram illustrating an example of a reporting configuration information element included in the configuration information according to the embodiment.
Fig. 11 is a diagram illustrating an example of a relationship between a measurement object (Measurement object) and a reporting configuration (Reporting config.) according to the embodiment.
Fig. 12 is a diagram illustrating an example of a measurement operation (Performing measurements) by the UE according to the embodiment.
Fig. 13 is a diagram illustrating an example of a measurement report triggering operation (Measurement report triggering) by the UE according to the embodiment.
Fig. 14 is a diagram illustrating an example of a measurement reporting operation (Measurement reporting) by the UE according to the embodiment.
Fig. 15 is a diagram illustrating a first modification of the embodiment.
Fig. 16 is a diagram illustrating a second modification of the embodiment.

Description of Embodiments

With reference to the drawings, a mobile communication system according to an embodiment is described. In the description of the drawings, identical or similar parts are marked with identical or similar reference numerals.

(System Configuration)

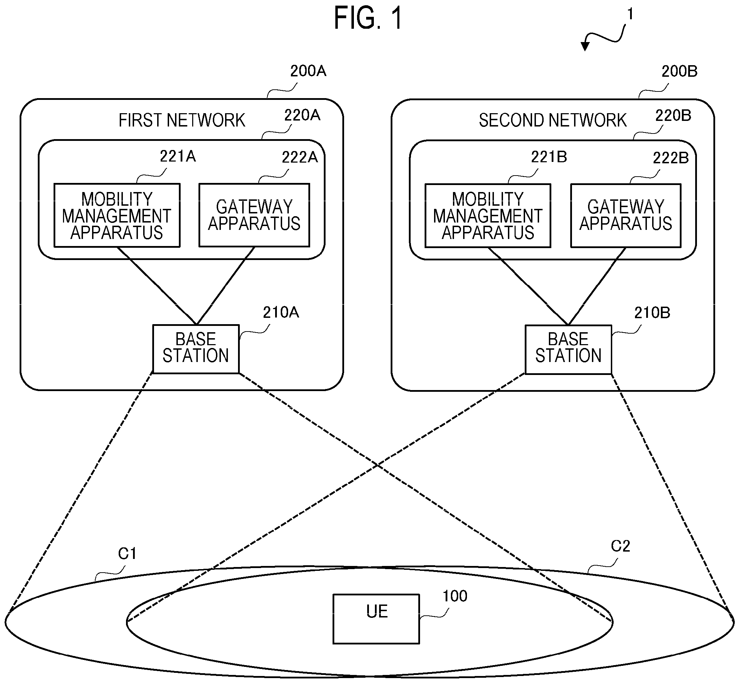

A configuration of a mobile communication system 1 according to the embodiment will be described with reference to Fig. 1. Hereinafter, an example in which the mobile communication system 1 is a 5th generation system (5G/NR: New Radio) of the 3GPP standard will be mainly described. However, a fourth generation system (4G/LTE:

Long Term Evolution) system and/or a sixth generation system may be at least partially applied to the mobile communication system 1.

As illustrated in Fig. 1, a mobile communication system 1 according to the embodiment includes a user equipment (UE) 100, a first network 200A, and a second network 200B.

The LTE 100 is a mobile radio communication apparatus. The LTE 100 is only required to be any apparatus used by the user. For example, the UE 100 is a mobile phone terminal (including a smartphone), a tablet terminal, a laptop PC, a communication module (including a communication card or a chipset), a sensor or an apparatus provided in the sensor, a vehicle or an apparatus provided in the vehicle (Vehicle LTE), and/or a flight vehicle or an apparatus provided in the flight vehicle (Aerial UE).

The UE 100 is a multi-SIM device compatible with a plurality of subscriber identity modules (SIM). In the following, an example in which the UE 100 is compatible with two SIMs will be mainly described, but the UE 100 may be compatible with three or more SIMs. "Compatible with a plurality of SIMs" means that the UE 100 has a capability to handle a plurality of SIMs, and the plurality of SIMs may not necessarily be mounted in the UE 100. Such a LTE 100 may be referred to as a "LTE supporting a plurality of SIMs". Note that the SIM is not limited to a card type SIM (what is called a SIM card), and may be an embedded SIM (what is called an eSIM) incorporated in the UE 100 in advance. The SIM may be referred to as a universal subscriber identity module (USIM).

The first network 200A is a network associated with one SIM of the UE 100. The second network 200B is a network associated with the other SIM of the UE 100. It is assumed that the LTE 100 has performed location registration in the first network 200A using one SIM and has performed location registration in the second network 200B using the other SIM. That is, the UE 100 exists in each of the first network 200A and the second network 200B. The first network 200A and the second network 200B may be networks of different communication operators. However, the first network 200A and the second network 200B may be networks of the same communication operator. Different public land mobile network (PLMN) IDs may be allocated to the first network 200A and the second network 200B.

The first network 200A includes a base station 210A constituting a radio access network, and a core network 220A. The core network 220A includes a mobility management apparatus 221A and a gateway apparatus 222A. Similarly, the second network 200B includes a base station 210B constituting a radio access network and a core network 220B. The core network 220B includes a mobility management apparatus 221B and a gateway apparatus 222B. Hereinafter, the base stations 210A and 200B will be simply referred to as a base station 210 when not distinguished, the mobility management apparatuses 221A and 221B will be simply referred to as a mobility management apparatus 221 when not distinguished, and the gateway apparatuses 222A and 222B will be simply referred to as a gateway apparatus 222 when not distinguished.

The base station 210 is a radio communication apparatus that performs radio communication with the UE 100. The base station 210 manages one or more cells. The base station 210 performs radio communication with the UE 100 that has established a connection in a radio resource control (RRC) layer with its own cell. The base station 210 has a radio resource management (RRM) function, a user data (hereinafter, simply referred to as "data") routing function, a measurement control function for mobility control and scheduling, and/or the like. The "cell" is used as a term indicating a minimum unit of a radio communication area. The "cell" is also used as a term indicating a function or a resource that performs radio communication with the UE 100. One cell belongs to one carrier frequency. Fig. 1 illustrates an example in which the base station 210A manages the cell C1 and the base station 210B manages the cell C2. The UE 100 is located in an overlapping region of the cell C1 and the cell C2.

A frame used in radio communication between the UE100 and the base station 210 is, for example, 10 ms, and a system frame number (SFN: System Frame Number) is allocated to each frame. Each frame is divided into, for example, subframes of 1 ms, and each subframe includes a plurality of OFDM (Orthogonal Frequency Division Multiplexing) symbols.

The base station 210 may be a gNB that is a 5G/NR base station or an eNB that is a 4G/LTE base station. Hereinafter, an example in which the base station 210 is a gNB will be mainly described. The base station 210 may be divided into a central unit (CU) and a distributed unit (DU). The base station 210 may be a relay node such as an integrated access and backhaul (IAB) node.

The mobility management apparatus 221 is an apparatus corresponding to a control plane, and is an apparatus that performs various mobility management for the UE 100. The mobility management apparatus 221 communicates with the UE 100 using non-access stratum (NAS) signaling and manages information of a tracking area in which the LTE 100 exists. The mobility management apparatus 221 performs paging through the base station 210 in order to notify an incoming call to the UE 100. The mobility management apparatus 221 may be an access and mobility management function (AMF) of 5G/NR or a mobility management entity (MME) of 4G/LTE.

The gateway apparatus 222 is an apparatus compatible with the user plane and performs transfer control of data of the UE 100. The gateway apparatus 222 may be a 5G/NR user plane function (UPF) or a 4G/LTE serving gateway (S-GW).

In the mobile communication system 1 configured as described above, a scenario is assumed in which the LTE 100 including only one receiver (RX) performs data communication while existing in the first network 200A and the second network 200B. When paging is performed from the second network 200B while communicating with the first network 200A, the LTE 100 cannot receive the paging and overlooks the incoming call.

In order for the UE100 to monitor paging in the second network 200B while maintaining the RRC connection with the first network 200A, the first network 200A configures, in the UE100, interruption timing at which the LTE100 can temporarily interrupt the communication with the first network 200A. However, in a case where the first network 200A and the second network 200B are not synchronized, that is, when the SFNs and/or the frame timings used by the first network and the second network are not aligned (not aligned), it is difficult to appropriately configure the interruption timing from the first network 200A to the UE100. In particular, in a case where the first network 200A and the second network 200B are operated by different communication operators, the first network 200A and the second network 200B can be asynchronous.

(Configuration Example of Protocol Stack)

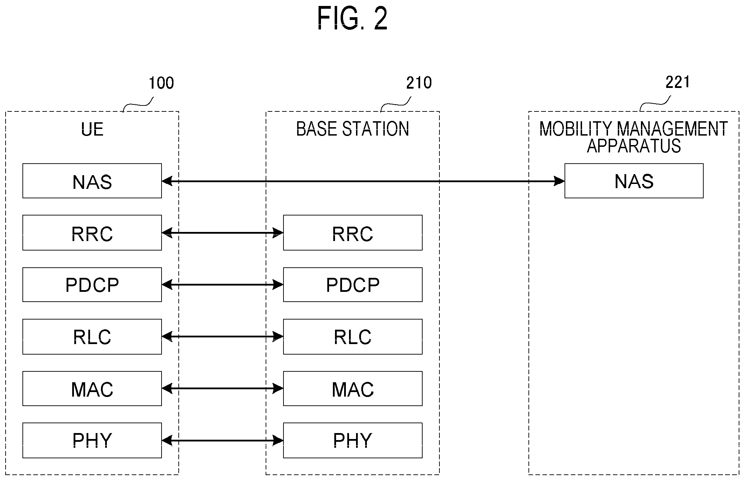

A configuration example of a protocol stack of the mobile communication system 1 will be described with reference to Fig. 2.

As illustrated in Fig. 2, a protocol of a radio section between the UE 100 and the base station 210 includes a physical (PHY) layer, a medium access control (MAC) layer, a radio link control (RLC) layer, a packet data convergence protocol (PDCP) layer, and RRC layer.

The PHY layer performs encoding/decoding, modulation/demodulation, antenna mapping/demapping, and resource mapping/demapping. Data and control information are transmitted between the PHY layer of the LTE 100 and the PHY layer of the base station 210 via a physical channel.

The MAC layer performs priority control of data, a retransmission process by hybrid automatic repeat request (HARQ), a random access procedure, and the like. Data and control information are transmitted between the MAC layer of the UE 100 and the MAC layer of the base station 210 via a transport channel. The MAC layer of the base station 210 includes a scheduler. The scheduler determines uplink and downlink transport formats (transport block size, modulation and coding scheme (MCS)) and allocated resources to the UE 100.

The RLC layer transmits data to the RLC layer on the reception side using the functions of the MAC layer and the PHY layer. Data and control information are transmitted between the RLC layer of the LTE 100 and the RLC layer of the base station 210 via a logical channel.

The PDCP layer performs header compression/decompression and encryption/decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control and a radio bearer that is a unit in which an access stratum (AS) performs QoS control.

The RRC layer controls a logical channel, a transport channel, and a physical channel according to establishment, re-establishment, and release of a radio bearer. RRC signaling for various configurations is transmitted between the RRC layer of the UE 100 and the RRC layer of the base station 210. When there is an RRC connection between the RRC of the UE 100 and the RRC of the base station 210, the UE 100 is in an RRC connected state. When there is no RRC connection between the RRC of the UE 100 and the RRC of the base station 210, the UE 100 is in an RRC idle state. When the RRC connection between the RRC of the LTE 100 and the RRC of the base station 210 is suspended, the UE 100 is in an RRC inactive state.

A NAS layer located above the RRC layer performs session management and mobility management of the UE 100. NAS signaling is transmitted between the NAS layer of the UE 100 and the NAS layer of the mobility management apparatus 221.

Note that the UE 100 has an application layer and the like in addition to the protocol of the radio interface.

(Configuration Example of LTE)

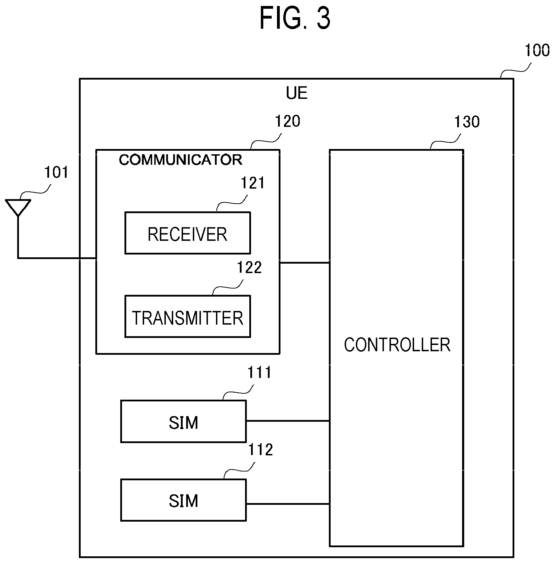

A configuration example of the UE 100 will be described with reference to Fig. 3.

As illustrated in Fig. 3, the UE 100 includes an antenna 101, a SIM 111, a SIM 112, a communicator 120, and a controller 130. The antenna 101 may be provided outside the UE 100. The SIM 111 and the SIM 112 are SIM cards or eSIM.

The SIM 111 stores subscriber information and configuration information necessary for the UE 100 to communicate with the first network 200A. The SIM 111 stores identification information of the UE 100 in the first network 200A, for example, a telephone number, an international mobile subscriber identity (IMSI), and the like.

The SIM 112 stores subscriber information and configuration information necessary for the UE 100 to communicate with the second network 200B. The SIM 112 stores the identification information of the LTE 100 in the second network 200B, for example, a telephone number, IMSI, and the like.

The communicator 120 performs radio communication with the first network 200A and radio communication with the second network 200B via the antenna 101 under the control of the controller 130. The communicator 120 may include only one receiver (RX) 121. In this case, the communicator 120 cannot simultaneously perform reception from the first network 200A and reception from the second network 200B. The communicator 120 may include only one transmitter (TX) 122. However, the communicator 120 may include a plurality of transmitters 122. The receiver 121 converts a radio signal received by the antenna 101 into a received signal that is a baseband signal, performs signal processing on the received signal, and outputs the received signal to the controller 130. The transmitter 122 performs signal processing on a transmission signal that is a baseband signal output from the controller 130, converts the signal into a radio signal, and transmits the radio signal from the antenna 101.

The controller 130 controls the communicator 120 and performs various controls in the UE 100. The controller 130 controls communication with the first network 200A using the SIM 111 and controls communication with the second network 200B using the SIM 112. The controller 130 includes at least one processor and at least one memory. The memory stores a program executed by the processor and information used for processing by the processor. The memory may include at least one of a read only memory (ROM), an erasable programmable read only memory (EPROM), an electrically erasable programmable read only memory (EEPROM), a random access memory (RAM), and a flash memory. The processor may include a digital signal processor (DSP) that performs digital processing of the digital signals and a central processing unit (CPU) that executes programs. Note that a part of the memory may be provided in the communicator 120. In addition, the DSP may be provided in the communicator 120.

In the LTE100 configured as described above, the communicator 120 communicates with the base station 210A of the first network 200A. For example, it is assumed that the UE100 is in an RRC connected state in the cell C 1 of the base station 210A of the first network 200A. In addition, it is assumed that the UE100 is in an RRC idle state or an RRC inactive state in the cell C2 of the base station 210B of the second network 200B. Such a cell C2 may be referred to as a camp-on-cell of the UE100. The controller 130 performs inter-network measurement for measuring a difference in SFN and a difference in frame timing (SFTD: SFN and Frame Timing Difference) between the first network 200A and the second network 200B.

Hereinafter, such SFTD measurement between different networks is referred to as "inter-network SFTD measurement". The communicator 120 transmits, to the base station 210A, an RRC message including a difference measurement result (hereinafter, referred to as an "inter-network SFTD measurement result") obtained by the inter-network SFTD measurement.

As a result, the base station 210A communicating with the UE100 can grasp the SFTD indicating a synchronization deviation amount between the first network 200A and the second network 200B on the basis of the inter-network SFTD measurement result included in the RRC message received from the UE100. Therefore, the base station 210A can appropriately configure the interruption timing for the UE100 in consideration of the synchronization deviation amount between the first network 200A and the second network 200B.

(Configuration Example of Base Station)

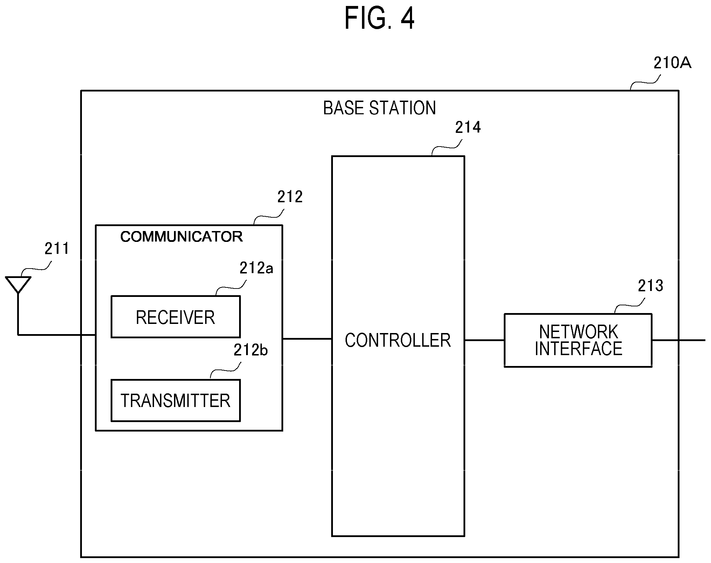

A configuration example of the base station 210A of the first network 200A will be described with reference to Fig. 4.

As illustrated in Fig. 4, the base station 210A includes an antenna 211, a communicator 212, a network interface 213, and a controller 214.

The communicator 212 communicates with the UE 100 via the antenna 211 under the control of the controller 214. The communicator 212 includes a receiver 212a and a transmitter 212b. The receiver 212a converts a radio signal received by the antenna 211 into a received signal that is a baseband signal, performs signal processing on the received signal, and outputs the signal to the controller 214. The transmitter 212b performs signal processing on a transmission signal that is a baseband signal output from the controller 214, converts the signal into a radio signal, and transmits the radio signal from the antenna 211.

The network interface 213 is connected to the core network 220A. The network interface 213 performs network communication with the mobility management apparatus 221A and the gateway apparatus 222A under the control of the controller 214.

The controller 214 controls the communicator 212 and performs various types of control in the base station 210A. The controller 214 includes at least one processor and at least one memory. The memory stores a program executed by the processor and information used for processing by the processor. The memory may include at least one of a ROM, an EPROM, an EEPROM, a RAM, and a flash memory. The processor may include a digital signal processor (DSP) that performs digital processing of the digital signals and a central processing unit (CPU) that executes programs. Note that a part of the memory may be provided in the communicator 212. In addition, the DSP may be provided in the communicator 212.

In the base station 210A configured as described above, the communicator 212 receives, from the UE100, the RRC message including the inter-network SFTD measurement result obtained by the inter-network SFTD measurement. The controller 214 acquires the inter-network SFTD measurement result included in the RRC message.

The communicator 212 may transmit, to the UE100, configuration information for configuring the inter-network SFTD measurement. As a result, the base station 210A communicating with the UE100 can grasp the SFTD indicating a synchronization deviation amount between the first network 200A and the second network 200B on the basis of the inter-network SFTD measurement result included in the RRC message received from the UE100. Therefore, the base station 210A can appropriately configure the interruption timing for the UE100 in consideration of the synchronization deviation amount between the first network 200A and the second network 200B.

The configuration information may include one or more sets of PLMN IDs and cell IDs to be an object of the inter-network SFTD measurement. As a result, the base station 210A can explicitly designate the cell C2 of the second network 200B to be an object of the inter-network SFTD measurement by the base station 210A.

The configuration information may include information for designating a camp-on-cell in which the UE100 in the RRC idle state or the RRC inactive state exists in the second network 200B as an object of the inter-network SFTD measurement. As a result, the base station 210A can cause the LTE100 to perform the inter-network SFTD measurement even if the base station 210A does not explicitly designate the cell C2 of the second network 200B to be an object of the inter-network SFTD measurement. The base station 210A may not have information on the second network 200B, which is different from the first network 200A to which the base station 210A belongs. In such a case, the base station 210A enables the LTE100 to determine the cell C2 of the second network 200B to be an object of the inter-network SFTD measurement.

The configuration information may include information designating that the LTE100 performs the inter-network SFTD measurement within a reception off period in a discontinuous reception (DRX: Discontinuous Reception) performed for the first network 200A by the LTE100, which is in the RRC connected state in the first network 200A. Such a DRX may be a DRX in the RRC connected state (what is called C-DRX). As a result, the base station 210A can cause the UE100 to perform efficient inter-network SFTD measurement.

(Operation of Mobile Communication System)

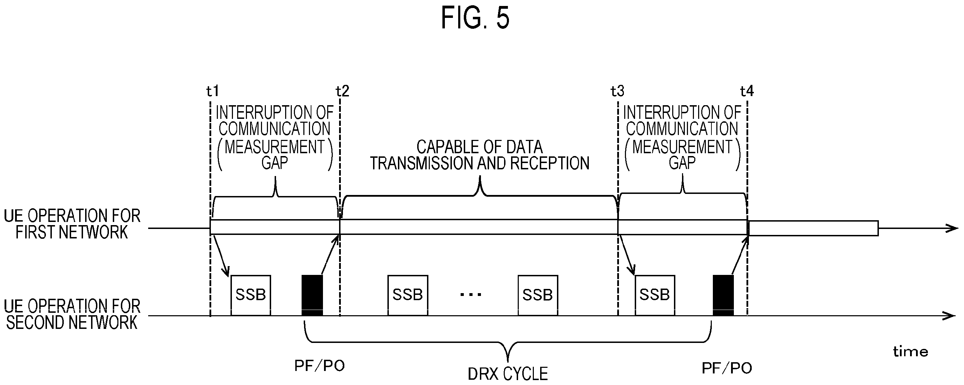

The operation of the mobile communication system 1 will be described with reference to Figs. 5 to 8.

(1) Operation Example of LTE

An operation example of the LTE 100 in which the interruption timing is configured from the base station 210A of the first network 200A will be described with reference to Fig. 5.

In the operation example illustrated in Fig. 5, it is assumed that the UE100 is in the RRC connected state in the cell C1 of the first network 200A, and is in the RRC idle state or the RRC inactive state in the cell C2 of the second network 200B.

As illustrated in Fig. 5, a period from time t1 to time t2 and a period from time t3 to time t4 correspond to the interruption timing at which the UE 100 interrupts communication with the base station 210A. Here, an example is illustrated in which the measurement gap is configured as an interruption timing using the radio condition of the second network 200B for measurement.

The controller 130 of the UE100 switches an object from which the communicator 120 receives a radio signal from the first network 200A to the second network 200B within each interruption timing, and performs measurement for an SSB (SS: Synchronization Signal/PBCH Block) of the second network 200B. As a result, the controller 130 of the LTE100 establishes synchronization with the second network 200B and measures the reception quality.

The SSB is an example of a known signal. The SSB includes a primary synchronization signal (PSS), a secondary synchronization signal (SSS), a PBCH (Physical Broadcast Channel), and a demodulation reference signal (DMRS). For example, the SSB may be composed of four consecutive OFDM symbols in the time domain. In addition, the SSB may be composed of 240 consecutive subcarriers (that is, 20 resource blocks) in the frequency domain. The PBCH is a physical channel that carries a master information block (MIB).

The controller 130 of the LTE100 measures the SSB of the second network 200B within each interruption timing, and then monitors the paging of the second network 200B. In the monitoring of the paging, whether or not there is paging addressed to the UE100 is confirmed by receiving a PDCCH (Physical Downlink Control CHannel) from the base station 210B of the second network 200B.

The UE100 intermittently monitors paging using the DRX to reduce power consumption. Such a cycle of monitoring paging is referred to as a DRX cycle. In addition, a frame in which the LTE100 should monitor paging is referred to as a paging frame (PF), and a subframe in which the UE100 should monitor paging among the PF is referred to as a paging occasion (PO: Paging Occasion).

Therefore, the interruption timing is preferably a period including the timing of the PF/PO configured in the UE100 and the SSB measurement timing immediately before the PF/PO. However, the SSB measurement at every PF/PO is not necessarily required for the UE100. For example, when the UE100 can maintain the measurement result (including the synchronization state) of the second network 200B even while communicating with the first network 200A, the UE100 may perform the SSB measurement at a cycle longer than the DRX cycle. For this reason, the interruption timing for the SSB measurement and the interruption timing for the paging monitoring may be separately configured.

Further, the interruption timing at which the communication with the base station 210A is interrupted is not limited to a case where it is configured in the UE 100 as the measurement gap. The interruption timing of interrupting the communication with the base station 210A may be configured using a DRX (C-DRX) parameter for the RRC connected state. For example, the base station 210A configures On Duration and the DRX cycle in the LTE 100 so that the period from time t2 to time t3 in Fig. 5 is On Duration that is a receiving-on period, and the period from time t1 to time t2 and the period from time t3 to time t4 are a receiving-off period. The UE 100 performs SSB measurement and paging monitoring of the second network 200B in the reception off period configured from the base station 210A. Thus, the interruption timing may be configured as a measurement gap and/or a receiving-off period of DRX.

(2) First Operation Example of Mobile Communication System

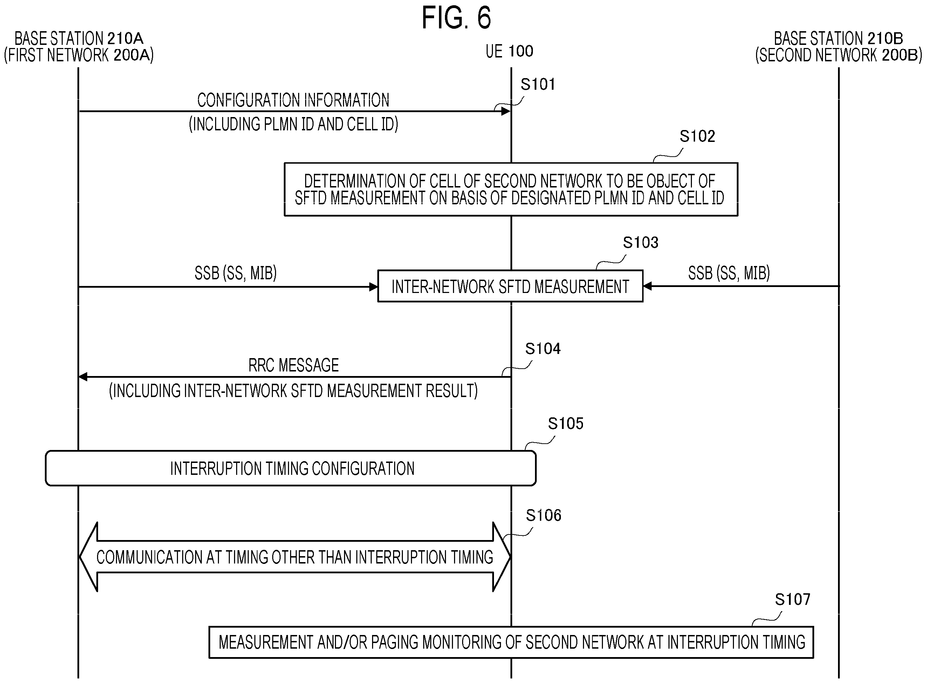

A first operation example of the mobile communication system 1 will be described with reference to Fig. 6. In the following operation description, it is assumed that the LTE100 is in the RRC connected state in the cell C1 of the base station 210A of the first network 200A, and is in the RRC idle state or the RRC inactive state in the cell C2 of the base station 210B of the second network 200B.

Step S101:

The base station 210A (the communicator 212) transmits, to the UE100, configuration information for configuring the inter-network SFTD measurement. In the first operation example, the configuration information includes one or more sets of PLMN IDs and cell IDs to be an object of the inter-network SFTD measurement. The configuration information may include information designating that the UE100 in the RRC connected state in the first network 200A performs the inter-network SFTD measurement within the reception off period in the DRX for the first network 200A. The UE100 (the communicator 120) receives such configuration information from the base station 210A.

The base station 210A (the communicator 212) may transmit, to the UE100, a dedicated RRC message including configuration information for configuring the inter-network SFTD measurement. Such a dedicated RRC message may be an RRC reconfiguration message, for example, an RRCReconfiguration message in 5G/NR or an RRCConnection-Reconfiguration message in 4G/LTE. Alternatively, the base station 210A (the communicator 212) may transmit, to the UE100, a broadcast message including configuration information for configuring the inter-network SFTD measurement. Such a broadcast message may be a system information block (SIB).

Step S102:

The LTE100 (the controller 130) determines the cell of the second network 200B to be an object of the inter-network SFTD measurement on the basis of the PLMN ID and the cell ID included in the configuration information received from the base station 210A. Specifically, for the second network 200B indicated by the PLMN ID included in the configuration information, the UE100 (the controller 130) determines the cell indicated by the cell ID included in the configuration information to be an object of the inter-network SFTD measurement. When a plurality of sets of the PLMN ID and the cell ID are included in the configuration information, the UE100 (the controller 130) may determine the cell indicated by each set to be an object of the inter-network SFTD measurement.

Step S103:

The LTE100 (the controller 130) performs the inter-network SFTD measurement on the cell (here, it is assumed to be the cell C2) of the second network 200B determined in step S102. Specifically, the UE100 (the controller 130) measures the SFTD between the cell C1, which is a serving cell in the first network 200A, and the cell C2 of the second network 200B determined in step S102.

The LTE100 (the controller 130) may perform the inter-network SFTD measurement within the measurement gap configured from the base station 210A. The UE100 (the controller 130) may perform the inter-network SFTD measurement within the receive-off period in the DRX for the first network 200A when the configuration information includes information designating that the inter-network SFTD measurement is performed within the reception off period.

The UE100 (the controller 130) specifies the timing of the frame start of each of the cell C1 and the cell C2 on the basis of, for example, the synchronization signals (PSS/SSS) in the SSB, and compares the timing of the frame start of each of the cell C1 and the cell C2. As a result, the UE100 (the controller 130) measures the difference between the frame timings of the cell C1 and the cell C2. In addition, the UE100 (the controller 130) specifies the SFN of each of the cell C1 and the cell C2 on the basis of the SFN included in the MIB in the SSB, for example, and compares the SFN of each of the cell C1 and the cell C2. As a result, the UE100 (the controller 130) measures the difference between the SFNs of the cell C1 and the cell C2. Note that in a case where the base station 210A and/or the base station 210B is an eNB, the UE100 (the communicator 120) may receive each of the synchronization signals (PSS/SSS) and the MIB from the eNB instead of the SSB. The UE100 (the controller 130) may perform the inter-network SFTD measurement on the basis of the synchronization signals (PSS/SSS) and MIB received.

Step S104:

The UE100 (the communicator 120) transmits, to the base station 210A, an RRC message including the inter-network SFTD measurement result obtained by the inter-network SFTD measurement in step S103. Hereinafter, an example in which such an RRC message is a measurement reporting message will be mainly described. The base station 210A (the communicator 212) receives the RRC message. The UE100 (the communicator 120) may transmit, to the base station 210A, the RRC message further including at least one of the PLMN ID and the cell ID associated with the inter-network difference measurement result. That is, the RRC message may include at least one of the PLMN ID of the second network 200B on which the inter-network SFTD measurement is performed and the cell ID of the cell C2 on which the inter-network SFTD measurement is performed. The base station 210A may determine the interruption timing to be configured in the UE100 in consideration of the PLMN ID and/or the cell ID in the RRC message. The RRC message may further include at least one of a base station ID of the base station 210B, a frequency ID of a frequency to which the cell C2 belongs, and information requesting a configuration of an interruption timing.

Step S105:

The base station 210A (the controller 214) determines an interruption timing to be configured in the UE100 on the basis of the information included in the RRC message received from the UE100, and configures the determined interruption timing in the UE100. For example, the base station 210A (the controller 214) transmits, to the UE100, an RRC reconfiguration message including an interruption timing configuration indicating the determined interruption timing. The LTE100 (the communicator 120) receives the RRC reconfiguration message. The UE100 (the controller 130) stores and applies the interruption timing configuration included in the RRC reconfiguration message received.

Such an RRC reconfiguration message may be an RRCReconfiguration message in 5G/NR or an RRCConnectionReconfiguration message in 4G/LTE. The interruption timing configuration configured in the UE100 includes, for example, an interruption cycle that is a cycle of the interruption timing and an interruption time width that is a time width of the interruption timing as configuration parameters. When the measurement gap is used as the interruption timing, the base station 210A (the controller 214) can use the measurement gap configuration as the interruption timing configuration to be configured in the UE100. The measurement gap configuration (measurement gap parameter set) may include gapOffset, mgl, mgrp, and mgta. mgl is a measurement gap length (measurement gap length) of the measurement gap. mgrp is a measurement gap repetition period (measurement gap repetition period: MGRP) of the measurement gap. mgta is measurement gap timing advance (measurement gap timing advance). gapOffset is a gap offset of a gap pattern with MGRP.

The base station 210A (the controller 214) determines whether or not at least one of the SFN and/or the frame timing is not aligned between the first network 200A and the second network 200B on the basis of the inter-network SFTD measurement result included in the RRC message received from the UE100. As a result, when it is determined that at least one of the SFN and/or the frame timing is not aligned between the first network 200A and the second network 200B, the base station 210A (the controller 214) generates the interruption timing configuration in consideration of the inter-network SFTD measurement result.

Step S106:

The base station 210A (controller 214) allocates radio resources to the UE 100 and communicates with the UE 100 at a timing other than the interruption timing configured in the UE 100. The UE 100 (controller 130) monitors the PDCCH of the base station 210A at a timing other than the interruption timing configured from the base station 210A and communicates with the base station 210A.

Step S107:

The base station 210A (the controller 214) does not allocate radio resources to the UE100 and interrupts the communication with the UE100 at the interruption timing configured in the UE100. The UE100 (the controller 130) interrupts the communication with the base station 210A at the interruption timing configured from the base station 210A, and performs measurement of a radio condition and/or monitoring of paging of the second network 200B.

Note that the RRC message carrying the inter-network SFTD measurement result may be an assistance information message that is transmitted by the UE100 to the base station 210A as auxiliary information after the UE100 establishes, re-establishes, or resumes the RRC connection with the base station 210A. That is, the RRC message transmitted from the UE100 to the base station 210A may be a message that is voluntarily transmitted after the UE100 transitions to the RRC connected state. The UE100 notifies the base station 210A of the inter-network SFTD measurement result in such an RRC message. As a result, when the UE100 determines that the measurement and/or the paging monitoring of the second network 200B is necessary, it is possible to prompt the base station 210A to configure the interruption timing. Note that such an assistance information message may be a LTEAssistanceInformation message and/or an RRC message (for example, MultiSIMUEInformation message) newly defined for a multi-SIM support LTE.

The RRC message carrying the inter-network SFTD measurement result may be a response message (for example, UEInformationResponse message) that is transmitted by the LTE100 in response to a transmission request from the base station 210A after the LTE100 establishes, re-establishes, or resumes the RRC connection with the base station 210A of the first network 200A. The UE100 may transmit the message used for establishing, re-establishing, or resuming the RRC connection with the base station 210A as described above by including information indicating that the inter-network SFTD measurement result to be transmitted to the base station 210A is present. In addition, the LTE100 may notify the base station 210A of the capability of supporting a plurality of SIMs using the logical channel ID of the MAC CE in the message 3 transmitted during the random access procedure. The base station 210A transmits, to the UE100, a message (for example, UEInformationRequest message) requesting the transmission of the inter-network SFTD measurement result on the basis of such information. In response to the request message, the UE100 transmits a response message including the inter-network SFTD measurement result to the base station 210A. The LTE100 notifies the base station 210A of the inter-network SFTD measurement result in such a response message. As a result, the base station 210A can perform control to request the inter-network SFTD measurement result from the UE100 only when the base station 210A can configure the interruption timing.

The RRC message carrying the inter-network SFTD measurement result may be a message used when the UE100 establishes, re-establishes, or resumes the RRC connection with the base station 210A. That is, the RRC message transmitted from the UE100 to the base station 210A may be a message (for example, message 5) that is transmitted in association with the random access procedure for the LTE100 to transition from the RRC idle state or the RRC inactive state to the RRC connected state. The base station 210A may transmit the configuration information to the UE100 in the message 4 of the random access procedure. The LTE100 notifies the base station 210A of the inter-network SFTD measurement result in such an RRC message. As a result, the base station 210A can grasp the inter-network SFTD at the start of communication between the LTE100 and the base station 210A. Note that the RRC message for establishing the RRC connection with the base station 210A may be an RRCSetupComplete message in 5G/NR or an RRCConnectionSetupComplete message in 4G/LTE. The RRC message for re-establishing the RRC connection with the base station 210A may be an RRCReestablishmentComplete message in 5G/NR or an RRCConnectionReestablishmentComplete message in 4G/LTE. The RRC message for resuming the RRC connection with the base station 210A may be an RRCResumeComplete message.

(3) Second Operation Example of Mobile Communication System

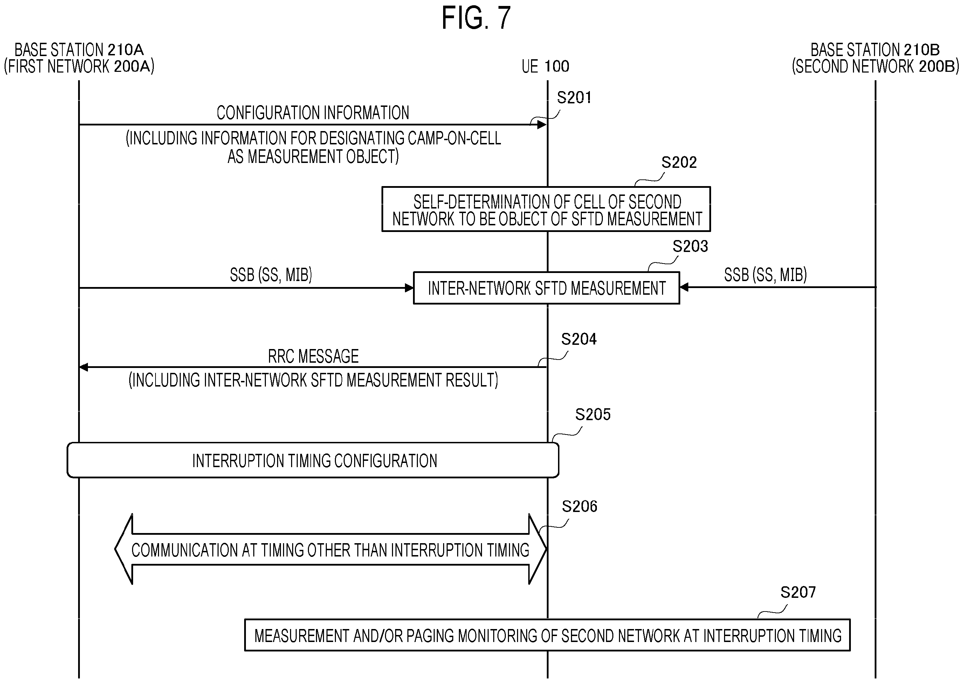

With reference to Fig. 7, a second operation example of the mobile communication system 1 will be described mainly with respect to differences from the first operation example described above.

Step S201:

The base station 210A (the communicator 212) transmits, to the UE100, configuration information for configuring the inter-network SFTD measurement. In the second operation example, the configuration information includes, for example, information designating a camp-on-cell in which the UE100 in the RRC idle state or the RRC inactive state exists in the second network 200B as an object of the inter-network SFTD measurement. That is, in the second operation example, the configuration information does not explicitly designate the cell of the second network 200B to be an object of the inter-network SFTD measurement, but causes the UE100 to determine the cell of the second network 200B to be a measurement object. The configuration information may include information designating that the UE100 in the RRC connected state in the first network 200A performs the inter-network SFTD measurement within the reception off period in the DRX for the first network 200A. The UE100 (the communicator 120) receives such configuration information from the base station 210A.

Step S202:

Even if the PLMN ID and/or the cell ID to be an object of the inter-network SFTD measurement are/is not included in the configuration information, the UE100 (the controller 130) determines the cell of the second network 200B that satisfies a predetermined condition to be an object of the inter-network SFTD measurement. In the second operation example, the predetermined condition is, for example, a condition that the cell is a camp-on-cell in which the UE100 in the RRC idle state or the RRC inactive state exists in the second network 200B.

Step S203:

The LTE100 (the controller 130) performs the inter-network SFTD measurement on the camp-on-cell (here, it is assumed to be the cell C2) of the second network 200B determined in step S202. Specifically, the UE100 (the controller 130) measures the SFTD between the cell C1, which is the serving cell in the first network 200A, and the cell C2, which is the camp-on-cell in the second network 200B determined in step S202.

The LTE100 (the controller 130) may perform the inter-network SFTD measurement within the measurement gap configured from the base station 210A. The UE100 (the controller 130) may perform the inter-network SFTD measurement within the receive-off period in the DRX for the first network 200A when the configuration information includes information designating that the inter-network SFTD measurement is performed within the reception off period.

Steps S204 to S207:
The operations in steps S204 to S207 are similar to the operations in the first operation example described above.

(4) Third Operation Example of Mobile Communication System

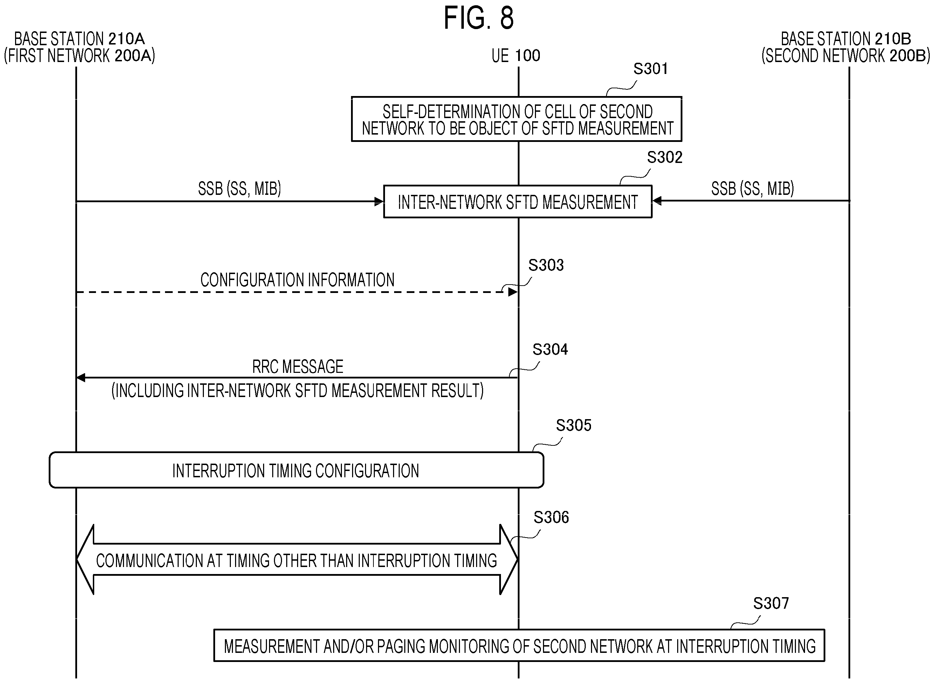

With reference to Fig. 8, a third operation example of the mobile communication system 1 will be described mainly with respect to differences from the first and second operation examples described above.

Step S301:

Similarly to the second operation example described above, the UE100 (the controller 130) determines the cell of the second network 200B that satisfies a predetermined condition to be an object of the inter-network SFTD measurement even if the PLMN ID and/or the cell ID are not designated from the base station 210A. The predetermined condition is a condition that the cell is a camp-on-cell in which the UE100 in the RRC idle state or the RRC inactive state exists in the second network 200B.

Step S302:

The LTE100 (the controller 130) voluntarily performs the inter-network SFTD measurement even if there is no instruction from the base station 210A. As a result, it is possible to increase the possibility that the base station 210A can acquire the inter-network SFTD measurement result. For example, the UE100 (the controller 130) may voluntarily perform the inter-network SFTD measurement when a condition that the UE100 is in the RRC connected state in the cell C1 of the base station 210A of the first network 200A, and is in the RRC idle state or the RRC inactive state in the cell C2 of the base station 210B of the second network 200B is satisfied.

Step S303:

The base station 210A (the communicator 212) may transmit, to the UE100, configuration information for configuring the inter-network SFTD measurement. In response to the reception of the configuration information, the UE100 (the controller 130) may determine to transmit the inter-network SFTD measurement result to the base station 210A. However, step S303 is not essential and can be omitted.

Steps S304 to S307:

The operations in steps S304 to S307 are similar to the operations in the first and second operation examples described above.

(5) Specific Example of Configuration Information

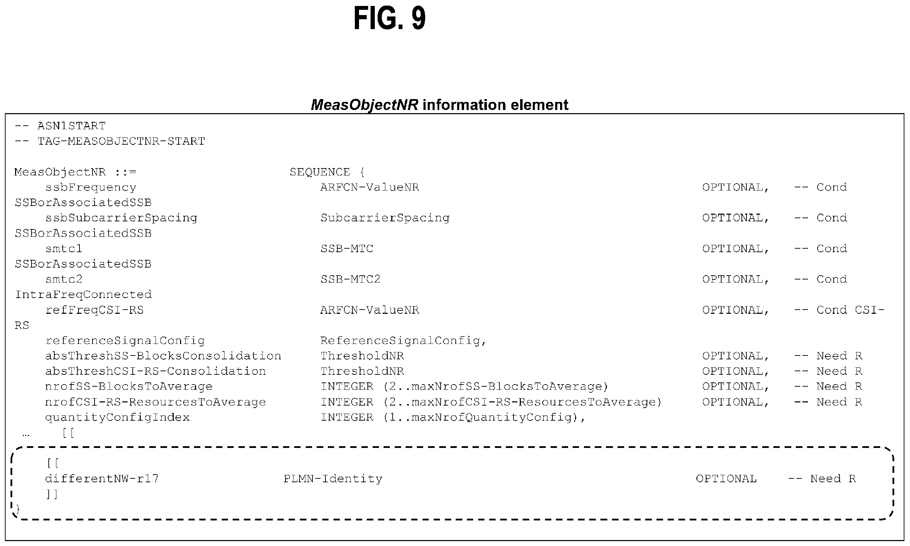

A specific example of the configuration information transmitted from the base station 210A to the LTE100 will be described with reference to Figs. 9 to 11.

First, an example of a measurement object information element included in the configuration information will be described with reference to Fig. 9. Here, an example in which the measurement object information element is "MeasObjectNR" defined in the 5G/NR RRC specification will be described. "MeasObjectNR" is an information element for configuring a RAT (Radio Access Technology) and/or a frequency to be a measurement object by the UE100, and is an information element applicable to intra-frequency or inter-frequency measurement of the SSB and/or a CSI-RS (Channel State Information-Reference Signal).

"MeasObjectNR" includes "differentNW-r17" indicating whether or not the measurement object indicates a resource of another network as an optional (OPTIONAL) information element (field). "differentNW-r17" may include a PLMN ID (PLMN-Identity) of the measurement object. Note that "Need R" means that the information element is stored by the UE100. "differentNW-r17" can be used, for example, in the first operation example and the second operation example described above.

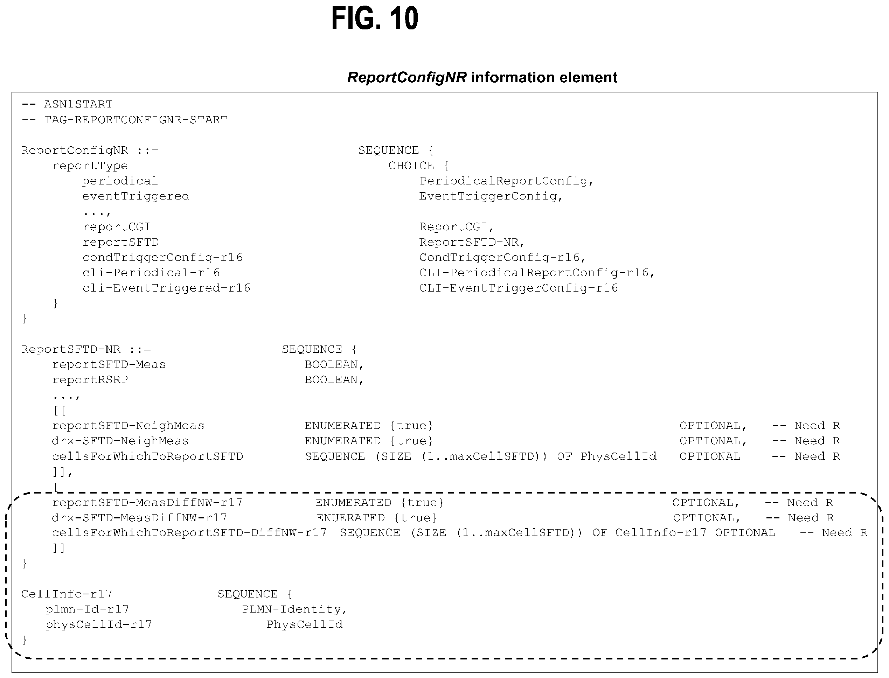

Second, an example of a reporting configuration information element included in the configuration information will be described with reference to Fig. 10. Here, an example in which the reporting configuration information element is "ReportConfigNR" defined in the 5G/NR RRC specification will be described. "ReportConfigNR" is an information element that includes a configuration parameter related to the transmission of the measurement reporting message.

"ReportConfigNR" has "report SFTD-MeasDiffNW-r 17", "drx-SFTD-MeasDiffNW-r17", and "cellsForWhich-ToReportSFTD-DiffNW-r17" as optional (OPTIONAL) information elements (fields).

"reportSFTD-MeasDiffNW-r17" is information designating a camp-on-cell in which the LTE100 in the RRC idle state or the RRC inactive state exists in the second network 200B as an object of the inter-network SFTD measurement. When "report SF TD-MeasDiffNW-r 17" is set to "true", a camp-on-cell in which the UE100 in the RRC idle state or the RRC inactive state exists in the second network 200B is designated as an object of the inter-network SFTD measurement. When "reportSFTD-MeasDiffNW-r17" is set to "true", the LTE100 may perform the inter-network SFTD measurement within the measurement gap configured from the base station 210A. "report SF TD-MeasDiffNW-r 17" can be used, for example, in the second operation example described above.

"drx-SFTD-MeasDiffNW-r17" is information designating that the UE100 performs the inter-network SFTD measurement within the reception off period in the DRX performed for the first network 200A by the UE100, which is in the RRC connected state in the first network 200A. When "drx-SFTD-MeasDiffNW-r17" is set to "true", it is designated that the LTE100 performs the inter-network SFTD measurement within the reception off period in the DRX performed for the first network 200A by the UE100, which is in the RRC connected state in the first network 200A. Only when "report SFTD-MeasDiffNW-r 17" is set to "true", "drx-SFTD-MeasDiffNW-r17" may be set to "true". "reportSFTD-MeasDiffNW-r17" can be used, for example, in the second operation example described above.

"cellsForWhichToReportSFTD-DiffNW-r17" is information including one or more sets of the PLMN ID and the cell ID of the second network 200B to be an object of the inter-network SFTD measurement. "cellsForWhichToReport-SFTD-DiffNW-r17" can include a plurality of "CellInfo-r17" that designate cells. The designated cell is not limited to the camp-on-cell of the UE100. "CellInfo-r17" includes a set of a PLMN ID (plmn-Id-r17) and a cell ID (physCellId-r17). "cellsForWhichToReportSFTD-DiffNW-r17" can be used, for example, in the first operation example described above.

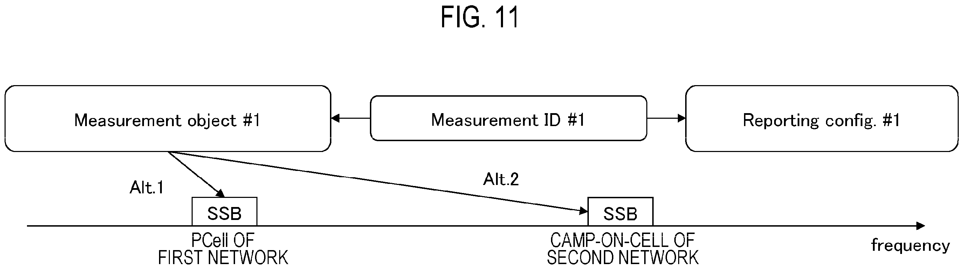

Third, an example of a relationship between a measurement object (Measurement object) and a reporting configuration (Reporting config.) will be described with reference to Fig. 11. The measurement object (Measurement object) and the reporting configuration (Reporting config.) are associated with each other by a measurement ID (Measurement ID). That is, the reporting configuration (Reporting config.) needs to be associated with the measurement object (Measurement object).

In Dual Connectivity, the UE100 simultaneously communicates with two base stations. In general SFTD measurement used in such Dual Connectivity, an SSB of a primary secondary cell (PSCell) of a secondary base station (SN: Secondary Node) to be a measurement object is configured as a measurement object (Measurement object) with reference to a primary cell (PCell) of a master base station (MN: Master Node). On the other hand, in Multi-SIM scenario, the first network 200A and the second network 200B may be provided by different communication operators, and thus the base station 210A of the first network 200A may not know information on the second network 200B.

Therefore, the following two methods are conceivable as a method of configuring the measurement object (Measurement object):

Alt. 1: Configure an SSB of a PCell of the first network 200A as the measurement object (Measurement object).
Alt.2: Configure an SSB of a camp-on-cell of the second network 200B as the measurement object (Measurement object).

According to Alt. 1, even when the base station 210A of the first network 200A cannot know information on the second network 200B, it is possible to configure the measurement object (Measurement object) to be associated with the reporting configuration (Reporting config.) used for the inter-network SFTD measurement result.

(6) Specific Examples of LTE Operations

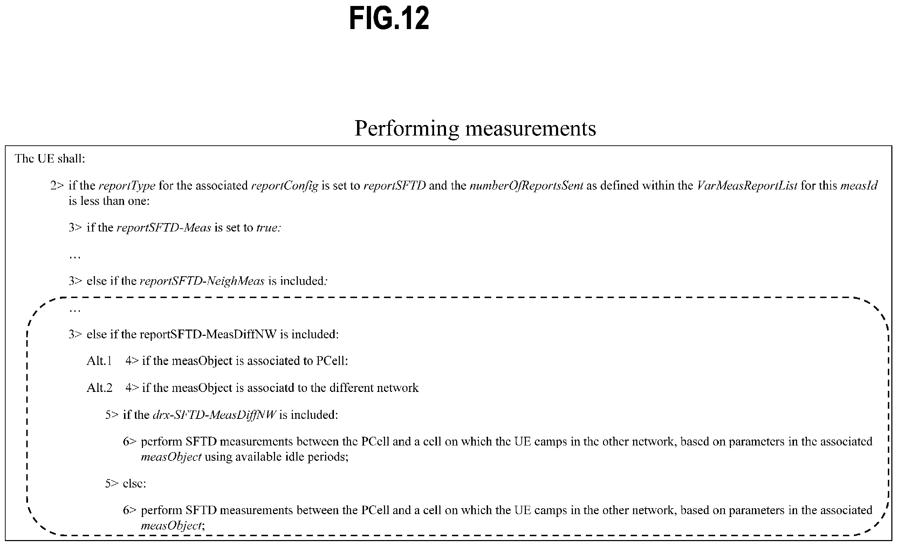

Specific examples of the operations of the UE100 will be described with reference to Figs. 12 to 14 on the premise of the specific example of the configuration information described above.

First, an example of a measurement operation (Performing measurements) by the UE100 will be described with reference to Fig. 12. It is assumed that "reportSFTD-MeasDiffNW" is included in the configuration information, that is, "reportSFTD-MeasDiffNW" is set to "true". At this time, further, a measurement object (Measurement object) associated with "reportSFTD-MeasDiffNW" may be either Alt. 1 or Alt.2 described above. In such a case, the LTE100 determines whether or not "drx-SFTD-MeasDiffNW" is included in the configuration information. When "drx-SFTD-MeasDiffNW" is included in the configuration information, the LTE100 performs the inter-network SFTD measurement between the primary cell (PCell) of the first network 200A and the camp-on-cell of the second network 200B by using available reception off periods (available idle periods) of DRX. On the other hand, when "drx-SFTD-MeasDiffNW" is not included in the configuration information, the UE100 performs the inter-network SFTD measurement between the primary cell (PCell) of the first network 200A and the camp-on-cell of the second network 200B by using, for example, the measurement gap.

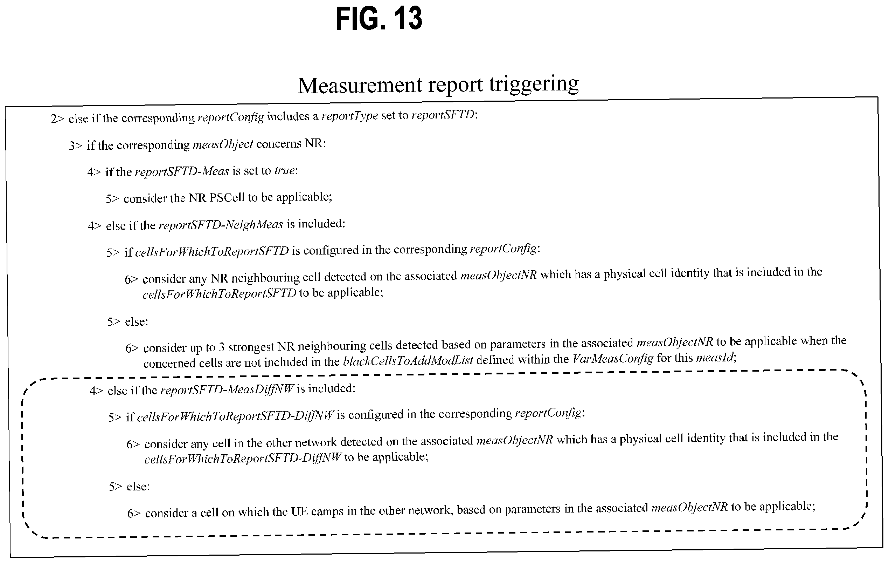

Second, an example of a measurement report triggering operation (Measurement report triggering) by the LTE100 will be described with reference to Fig. 13. It is assumed that "reportSFTD-MeasDiffNW" is included in the configuration information, that is, "reportSFTD-MeasDiffNW" is set to "true". At this time, "cellsForWhichToReportSFTD-DiffNW" may be further configured. In such a case, the UE100 regards a cell in another network detected in the associated "measObjectNR" as applicable to the measurement report, the cell having a cell ID included in "cellsForWhichToReportSFTD-DiffNW". On the other hand, "cellsForWhichToReportSFTD-DiffNW" may not be configured. In such a case, the UE100 regards a cell camped on another network as applicable to the measurement report on the basis of the parameter of the associated "measObjectNR".

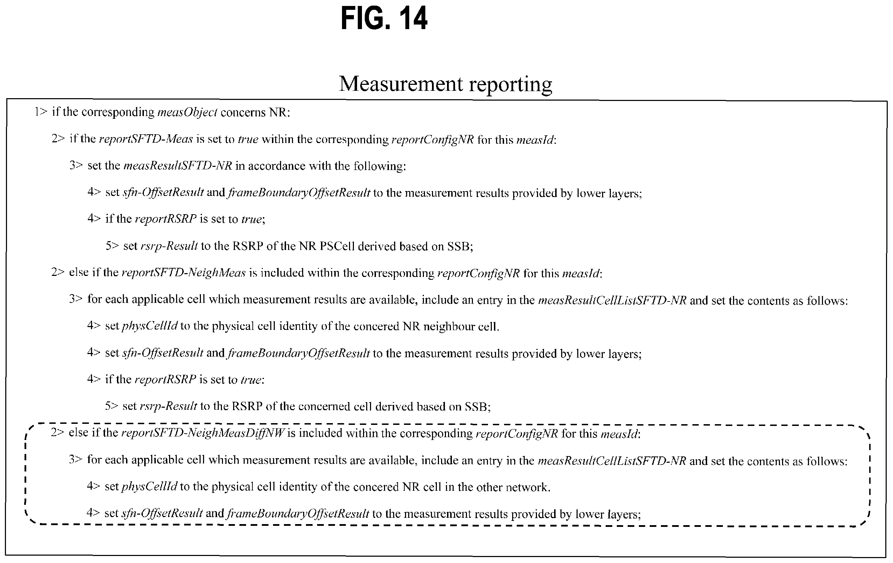

Third, an example of a measurement reporting operation (Measurement reporting) by the UE100 will be described with reference to Fig. 14. It is assumed that "reportSFTD-NeighMeasDiffNW" is included in the configuration information. In such a case, the UE100 configures, for the corresponding cell for which the measurement result is available, the cell IDs of the cells of the other networks and "sfn-OffsetResult" and "frameBoundaryOffsetResult", which are the inter-network SFTD measurement results, in the entry of "measResultCellListSFTD-NR", which is the list of the inter-network SFTD measurement results. "measResultCellListSFTD-NR" is transmitted from the UE100 to the base station 210A in a measurement reporting message.

(Summary of Embodiments)

As described above, the base station 210A communicating with the UE100 can grasp the SFTD indicating the synchronization deviation amount between the first network 200A and the second network 200B on the basis of the inter-network SFTD measurement result included in the RRC message received from the UE100. Therefore, the base station 210A can appropriately configure the interruption timing for the UE100 in consideration of the synchronization deviation amount between the first network 200A and the second network 200B.

[First Modification]

A first modification example will be described mainly with respect to differences from the above-described embodiment.

In order for the UE100 to receive paging from the second network 200B, the LTE100 needs to measure a radio condition in the second network 200B before monitoring paging from the second network 200B. The measurement of the radio condition includes at least one of processing of establishing synchronization by receiving a synchronization signal and processing of executing measurement based on a known signal. That is, in order for the UE100 to measure the radio condition in the second network 200B, it is necessary to receive a known signal from the base station 210 of the second network 200B.

In the first modification, the controller 130 of the UE100 acquires a measurement timing configuration indicating the timing at which the UE100 measures a radio condition in the second network 200B. That is, the controller 130 acquires the measurement timing configuration for measurement based on a known signal in the second network 200B.

The measurement timing configuration is, for example, an SMTC (SSB measurement timing configuration) window that is configured in the UE100 from the base station 210B of the second network 200B. The UE100 detects and measures the SSB within the configured SMTC window. The SMTC window is designated by configuration parameters of a measurement cycle, an offset, and a measurement time width of the SSB. The measurement cycle and the offset of the SSB are a cycle and an offset of a measurement window for receiving the SSB, for example, given by the number of subframes. The measurement cycle is configured to one out of 5, 10, 20, 40, 80, and 160 ms, and is not necessarily the same as the actual transmission cycle of the SSB. The measurement time width (also referred to as Duration) is a time length of the measurement window for receiving the SSB, and is given by, for example, the number of subframes. One out of 1, 2, 3, 4, and 5 ms (that is, 1, 2, 3, 4, and 5 subframes) is configured according to the number of SSBs to be transmitted.

Note that, in a case where the base station 210B of the second network 200B is an eNB, the timing at which the PSS and/or the SSS are transmitted (hereinafter, also referred to as a PSS/SSS window) can be used as the measurement timing configuration instead of the SMTC window.

In the first modification, the controller 130 of the UE100 generates an RRC message including the acquired measurement timing configuration and the inter-network SFTD measurement result described above. The communicator 120 of the UE100 transmits the RRC message to the base station 210A of the first network 200A. After transmitting the RRC message, the communicator 120 of the UE100 receives, from the base station 210A, an RRC reconfiguration message including an interruption timing configuration indicating the timing of interrupting the communication with the base station 210A. The controller 130 of the LTE100 interrupts the communication with the base station 210A and measures the radio condition according to the interruption timing configuration.

In this manner, the RRC message including the measurement timing configuration in the second network 200B is transmitted from the UE100 to the base station 210A. As a result, the base station 210A can grasp the measurement timing at which the LTE100 should measure the radio condition of the second network 200B. As a result, the base station 210A can determine an appropriate interruption timing in consideration of the measurement timing of the radio condition of the second network 200B by the UE100.

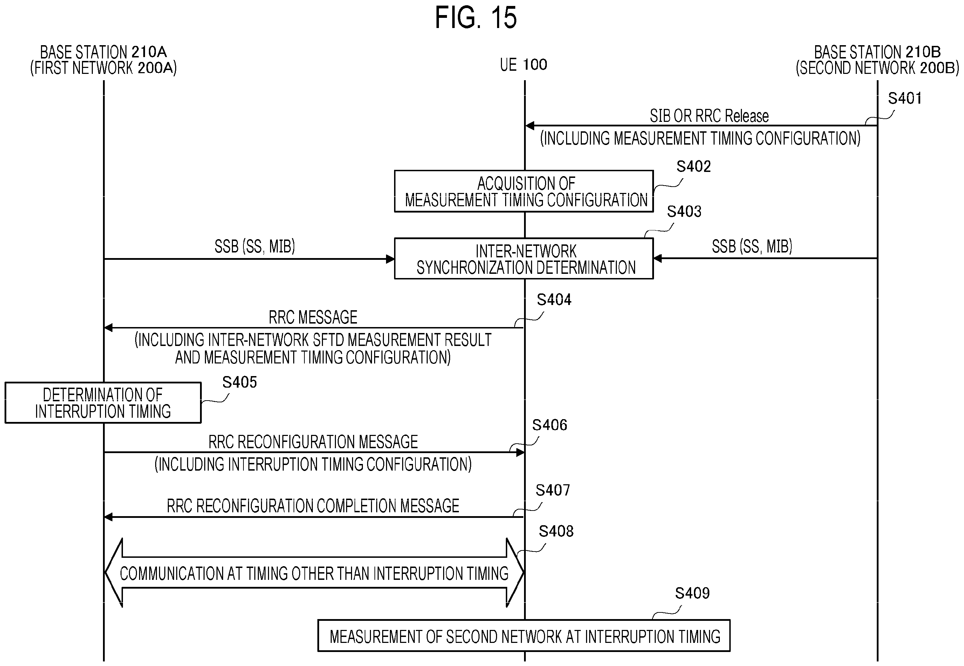

An operation example of the mobile communication system 1 according to the first modification example will be described with reference to Fig. 15. Since the basic operation is similar to that of the above-described embodiment, differences from the operation according to the above-described embodiment will be described.

Step S401:

The base station 210B (the communicator 212) of the second network 200B transmits a message including the measurement timing configuration in the second network 200B (step S401).

The message including the measurement timing configuration in the second network 200B may be a system information block (SIB) broadcast from the base station 210B. The UE100 can receive the SIB not only when the second network 200B is in the RRC connected state but also when the second network 200B is in the RRC idle state or the RRC inactive state. Such an SIB may be an SIB used to control cell reselection of the LTE100 in the RRC idle state or the RRC inactive state, for example, an SIB type 2 or an SIB type 4 in 5G/NR. The SIB type 2 is an SIB for intra-frequency cell reselection. The SIB type 4 is an SIB for inter-frequency cell reselection. The UE100 (the communicator 120) receives such an SIB. The UE100 (the controller 130) acquires the measurement timing configuration included in the SIB (step S402).

The message including the measurement timing configuration in the second network 200B may be an RRC release (RRCRelease) message transmitted from the base station 210B to the UE100. The RRC release message is a type of the RRC message, and is a message for causing the UE100 to transition from the RRC connected state to the RRC idle state or the RRC inactive state. By notifying the UE100 of the measurement timing configuration in the RRC release message, the measurement timing optimized for each UE can be configured in the UE100. The UE100 (the communicator 120) receives such an RRC release message. The UE100 (the controller 130) acquires the measurement timing configuration included in the RRC release message (step S402).

Note that the measurement timing configuration is not limited to the SMTC window or the PSS/SSS window described above. The measurement timing configuration may be configuration information indicating the timing at which the UE100 measures the radio condition in the second network 200B. The measurement timing configuration includes at least one of a measurement cycle, an offset, and a measurement time width as configuration parameters.

The UE100 (the controller 130) may generate and acquire the measurement timing configuration on the basis of a signal transmission configuration in the second network 200B. For example, the signal transmission configuration is at least one of the following 1) to 3) in the case of 5G/NR.

1) subCarrierSpacingCommon included in MIB broadcast from the base station 210B
2) ssb-PeriodicityServingCell included in an SIB type 1 broadcast from the base station 210B
3) ssb-PositionsInBurst included in the SIB type 1 broadcasted from the base station 210B

subCarrierSpacingCommon is information element indicating subcarrier spacing. The ssb-PeriodicityServingCell is an information element indicating a transmission cycle of the SSB. ssb-PositionsInBurst is an information element indicating the position of the SSB in the time domain.

Step S403:

The LTE100 (the controller 130) performs the inter-network SFTD measurement in the same manner as in the above-described embodiment. Note that step S403 may be performed simultaneously with step S402, or may be performed before step S402.

Step S404:

The UE100 (the controller 130) generates an RRC message including the measurement timing configuration acquired in step S402 and the inter-network SFTD measurement result acquired in step S403. Then, the LTE100 (the communicator 120) transmits the RRC message including the measurement timing configuration to the base station 210A of the first network 200A.

Step S405:

The base station 210A (the controller 214) determines the interruption timing to be configured in the UE100 on the basis of the inter-network SFTD measurement result and the measurement timing configuration included in the RRC message received from the UE100. For example, the base station 210A (the controller 214) determines the cycle and the time width of the interruption timing so as to cover the timing at which the UE100 performs the measurement of the second network 200B. Here, the base station 210A (the controller 214) determines the interruption timing in consideration of the inter-network synchronization state. The base station 210A (the controller 214) generates an RRC reconfiguration message including an interruption timing configuration indicating the determined interruption timing.

Step S406:

The base station 210A (the communicator 212) transmits the RRC reconfiguration message including the interruption timing configuration to the UE100. The UE100 (the communicator 120) receives the RRC reconfiguration message. The LTE100 (the controller 130) stores and applies the interruption timing configuration included in the RRC reconfiguration message received.

Step S407:

The LTE100 (communicator 120) transmits, to the base station 210A, an RRC reconfiguration completion message indicating that the configuration by the RRC reconfiguration message from the base station 210A is completed. The base station 210A (the communicator 212) receives the RRC reconfiguration completion message.

Step S408:

The base station 210A (the controller 214) allocates radio resources to the UE100 and communicates with the LTE100 at timing other than the interruption timing configured in the UE100. The UE100 (the controller 130) monitors the PDCCH of the base station 210A at timing other than the interruption timing configured from the base station 210A and communicates with the base station 210A.

Step S409:

The base station 210A (the controller 214) does not allocate radio resources to the UE100 and interrupts the communication with the UE100 at the interruption timing configured in the UE100. The LTE100 (the controller 130) interrupts the communication with the base station 210A and measures the radio condition of the second network 200B at the interruption timing configured from the base station 210A.

As described above, according to the first modification, the UE100 can measure the radio condition of the second network 200B using the interruption timing configuration in which the measurement timing configuration of the second network 200B is considered. Therefore, the UE100 can interrupt the communication with the base station 210A for the minimum necessary time, and a decrease in the throughput of the communication with the base station 210A can be reduced. Then, the UE100 can appropriately receive the paging of the second network 200B by measuring the radio condition of the second network 200B and then monitoring the paging of the second network 200B.

[Second Modification]

A second modification will be described mainly with respect to differences from the first modification example described above.

In the second modification, the controller 130 of the UE100 further acquires a paging parameter set for specifying a timing (that is, PF/PO) at which the UE100 monitors paging in the second network 200B. The communicator 120 of the UE100 transmits an RRC message further including the paging parameter set to the base station 210A. As a result, the base station 210A can grasp the timing at which the UE100 should perform paging monitoring of the second network 200B. As a result, the base station 210A can determine an appropriate interruption timing in consideration of the paging monitoring timing of the second network 200B by the UE100.

In the second modification, after transmitting the RRC message, the communicator 120 of the LTE100 receives, from the base station 210A, an RRC reconfiguration message including the interruption timing configuration indicating the timing of interrupting the communication with the base station 210A to measure the radio condition and monitor the paging. The controller 130 of the UE100 interrupts the communication with the base station 210A according to the interruption timing configuration and performs the measurement of the radio condition and the monitoring of the paging.

As a result, the LTE100 can monitor the paging of the second network 200B using the interruption timing configuration in which the paging parameter set of the second network 200B is considered. Therefore, the UE100 can interrupt the communication with the base station 210A for the minimum necessary time for the measurement of the radio condition of the second network 200B and the paging monitoring, and a decrease in the throughput of the communication with the base station 210A can be suppressed.

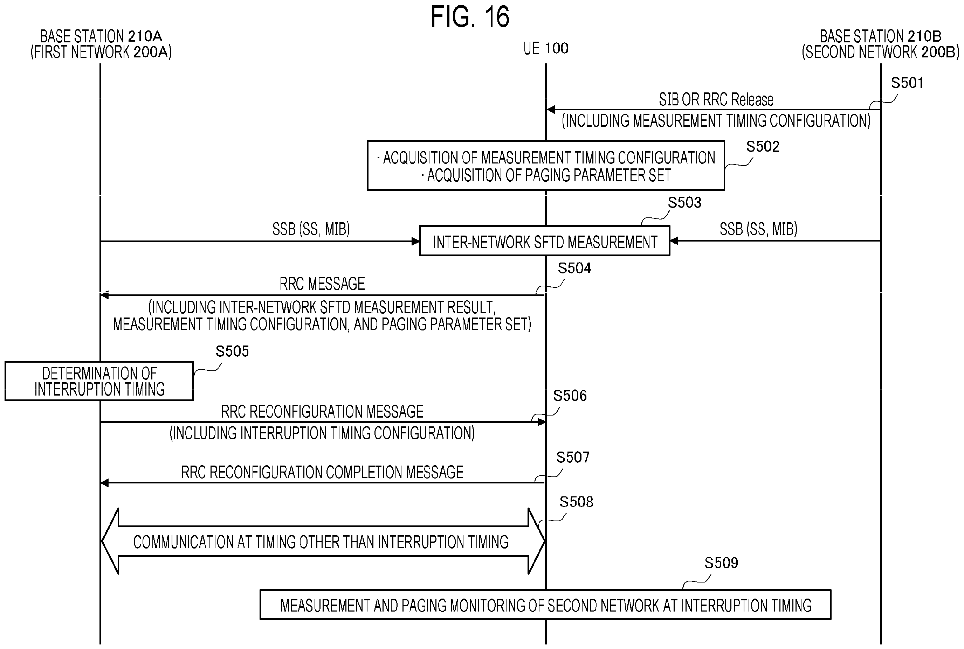

The second modification will be described with reference to Fig. 16.

Steps S501 to S502:

The base station 210B (the communicator 212) of the second network 200B transmits a message including the measurement timing configuration in the second network 200B (step S501). The UE100 (the controller 130) acquires the measurement timing configuration included in the message from the base station 210B (step S502). In the second modification, the UE100 (the controller 130) acquires not only the measurement timing configuration but also the paging parameter set (step S502).

For example, the paging parameter set includes a parameter set for specifying PF and PO of paging in the second network 200B. First, the paging parameter set may include configuration information for paging. The configuration information may be paging control channel (PCCH)-Config. The configuration information is included in system information transmitted in the second network 200B. The UE 100 (communicator 120) receives the system information in the second network 200B. Then, the UE 100 (controller 130) acquires the configuration information included in the system information.

Secondly, the paging parameter set includes the ID of the LTE 100 in the second network 200B. For example, in a case where the base station 210B of the second network 200B is a gNB, the ID is the least significant 10 bits of 5G-S-TMSI (temporary mobile subscriber identity) of the UE 100 in the second network 200B or the 5G-STMSI. When the base station 210B of the second network 200B is the eNB, the ID is the IMSI of the UE 100 in the second network 200B or the least significant 10 bits of the IMSI.

Here, a method of determining PF and PO will be described. For 5G/NR, PF is determined by the following equation:

$$(SFN + PF\_offset) \bmod T = (T \operatorname{div} N)*(UE\_ID \bmod N)$$

The SFN is an SFN of a PF. The PF_offset is an offset used to determine the PF. The T is a DRX (discontinuous reception) cycle of the UE100. UE_ID is the least significant 10 bits of the 5G-S-TMSI. The N is the total number of PFs in T. For example, T is indicated by defaultPagingCycle included in PCCH-Config. For example, N and PF_offset are indicated by nAndPagingFrameOffset included in PCCH-Config.

For 5G/NR, PO is determined by the following equation:

$$i\_s = floor(UE\_ID/N) \bmod Ns$$

The i_s indicates an index of PO. The UE_ID is the least significant 10 bits of the 5G-S-TMSI. The N is the total number of PFs in T. The T is a DRX cycle of the UE 100. The Ns is the number of POs for PF. For example, N is indicated by nAndPagingFrameOffset included in PCCH-Config. Ns is indicated by ns included in PCCH-Config. PO is associated with PF. For example, PO starts in or after PF.

For 4G/LTE, PF is determined by the following expression:

$$\text{SFN mod } T = (T \text{ div } N)*(UE\_ID \text{ mod} N)$$

The SFN is SFN of PF. The T is a DRX cycle of the UE 100. The N is a smaller one of T and nB. The nB is a parameter to be configured. The UE_ID is the least significant 10 bits of the IMSI. For example, T is indicated by the defaultPagingCycle included in PCCH-Config. nB is indicated by nB included in PCCH-Config.

For 4G/LTE, PO is determined by the following expression:

$$i\_s = \text{floor}(UE\_ID/N) \text{ mod } Ns$$

The i_s indicates an index of PO. The UE_ID is the least significant 10 bits of the IMSI. The N is a smaller one of T and nB. The T is a DRX cycle of the UE 100, and nB is a configured parameter. The Ns is the larger of 1 and nB/T. For example, T is indicated by the defaultPagingCycle included in PCCH-Config. nB is indicated by nB included in PCCH-Config.

Step S503:

The LTE100 (the controller 130) performs the inter-network SFTD measurement in the same manner as in the above-described embodiment. Note that step S503 may be performed simultaneously with step S502, or may be performed before step S502.

Step S504:

The UE100 (the controller 130) generates an RRC message including the measurement timing configuration and the paging parameter set acquired in step S502 and the inter-network SFTD measurement result acquired in step S503. Then, the LTE100 (the communicator 120) transmits the RRC message to the base station 210A of the first network 200A.

Step S505:

The base station 210A (the controller 214) determines the interruption timing to be configured in the UE100 on the basis of the measurement timing configuration, the paging parameter set, and the inter-network SFTD measurement result included in the RRC message received from the UE100. The base station 210A (the controller 214) determines the cycle and the time width of the interruption timing so as to cover the timing at which the UE100 performs the measurement of the second network 200B (for example, the SMTC window) and the timing at which the paging is monitored (for example, the PF/PO). The base station 210A (the controller 214) generates an RRC reconfiguration message including an interruption timing configuration indicating the determined interruption timing.

Step S506:

The base station 210A (communicator 212) transmits the RRC reconfiguration message including the interruption timing configuration to the UE 100. The UE 100 (communicator 120) receives the RRC reconfiguration message. The UE 100 (controller 130) stores and applies the interruption timing configuration included in the received RRC reconfiguration message.

Step S507:

The LTE 100 (communicator 120) transmits, to the base station 210A, an RRC reconfiguration completion message indicating that the configuration is completed by the RRC reconfiguration message from the base station 210A. The base station 210A (communicator 212) receives the RRC reconfiguration completion message.

Step S508:

The base station 210A (the controller 214) allocates radio resources to the UE100 and communicates with the LTE100 at timing other than the interruption timing configured in the UE100. The UE100 (the controller 130) monitors the PDCCH of the base station 210A at timing other than the interruption timing configured from the base station 210A and communicates with the base station 210A.

Step S509:

The base station 210A (controller 214) does not allocate radio resources to the LTE 100 and interrupts communication with the UE 100 at the interruption timing configured in the UE 100. The LTE 100 (controller 130) interrupts the communication with the base station 210A, measures the radio condition of the second network 200B, and monitors paging of the second network 200B at the interruption timing configured from the base station 210A.

[Other Embodiments]

In the operation of the above-described embodiment, the first network 200A and the base station 210A may be replaced with a cell C1 (first cell), or the first network 200A and the base station 210A may be replaced with a cell C2 (second cell).

The steps in the operations of the above-described embodiments may not necessarily be performed in chronological order according to the order described in the flow diagram or sequence diagram. For example, steps in an operation may be performed in an order different from the order described as a flow diagram or sequence diagram, or may be performed in parallel. In addition, some of the steps in the operation may be removed and additional steps may be added to the process. Furthermore, each operation flow described above is not limited to be separately and independently implemented, and can be implemented by combining two or more operation flows. For example, some steps of one operation flow may be added to another operation flow, or some steps of one operation flow may be replaced with some steps of another operation flow.

A program may be provided to cause a computer to execute the operations of the UE 100 or the base station 210. The program may be stored in a computer-readable medium. The program can be installed on a computer from a computer-readable medium having the program stored thereon. The computer-readable medium having the program stored thereon may be a non-transitory recording medium. The non-transitory recording medium may include, but is not limited to, a CD-ROM and a DVD-ROM. The UE 100 or the base station 210 may be embodied as a semiconductor integrated circuit (chipset, SoC, etc.) by integrating the circuits that execute the respective operations of the UE 100 or the base station 210.

Note that, in the above-described embodiments, "transmit" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive" may mean to perform processing of at least one layer in the protocol stack used for reception, or may mean to physically receive a signal wirelessly or by wire. Alternatively, "receive" may mean a combination of performing the processing of at least one layer and physically receiving a signal wirelessly or by wire.

Although the present disclosure has been described in accordance with examples, it is understood that the present disclosure is not limited to the examples and structures. The present disclosure also includes various modification examples and modifications within an equivalent range. In addition, various combinations and modes, and other combinations and modes including only one element, more elements, or less elements are also within the scope and idea of the present disclosure.

**Claims**

1. A user equipment (100) configured to communicate with a plurality of networks (200A, 200B) using a plurality of subscriber identity modules (111, 112), the user equipment comprising:

   a communicator (120) configured to communicate with a base station (210A) of a first network (200A) included in the plurality of networks (200A, 200B); and
   a controller (130) configured to perform inter-network measurement for measuring a difference in system frame number and a difference in frame timing between the first network (200A) and a second network (200B) included in the plurality of networks (200A, 200B), wherein

the communicator (120) is configured to transmit a radio resource control (RRC) message including a difference measurement result obtained by the inter-network measurement to the base station (210A).

2. The user equipment according to claim 1, wherein

the communicator (120) is configured to receive configuration information for configuring the inter-network measurement from the base station (210A), and
the controller (130) is configured to determine a cell of the second network (200B) to be an object of the inter-network measurement on a basis of a PLMN ID and/or a cell ID included in the configuration information.

3. The user equipment according to claim 2, wherein
the configuration information includes one or more sets of the PLMN IDs and the cell IDs to be an object of the inter-network measurement.

4. The user equipment according to claim 1, wherein

the communicator (120) is configured to receive the configuration information for configuring the inter-network measurement from the base station (210A), and
the controller (130) is configured to determine a cell of the second network (200B) that satisfies a predetermined condition to be an object of the inter-network measurement even if the PLMN ID and/or the cell ID to be an object of the inter-network measurement are not included in the configuration information.

5. The user equipment according to claim 4, wherein
the configuration information includes information that designates, as the predetermined condition, a condition that the cell is a camp-on-cell in which the user equipment (100) in an RRC idle state or an RRC inactive state exists in the second network (200B).

6. The user equipment according to any one of claims 2 to 5, wherein
the configuration information includes information designating that the user equipment (100) in an RRC connected state in the first network (200A) performs the inter-network measurement within a reception off period in a discontinuous reception for the first network (200A).

7. The user equipment according to claim 1, wherein

the controller (130) is configured to voluntarily perform the inter-network measurement even when there is no instruction from the base station (210A), and
even when a PLMN (Public Land Mobile Network) ID and/or a cell ID is not designated from the base station (210A), the controller (130) is configured to determine a cell of the second network (200B) that satisfies a predetermined condition to be an object of the inter-network measurement.

8. The user equipment according to claim 7, wherein
the predetermined condition is a condition that the cell is a camp-on-cell in which the user equipment (100) in an RRC idle state or an RRC inactive state exists in the second network (200B).

9. The user equipment according to any one of claims 1 to 8, wherein
the communicator (120) is configured to transmit the RRC message further including at least one of a PLMN (Public Land Mobile Network) ID and a cell ID associated with the difference measurement result to the base station (210A).

10. A base station (210A) of a first network (200A) included in a plurality of networks (200A, 200B) in a mobile communication system (1) having a user equipment (100) configured to communicate with the plurality of networks (200A, 200B) using a plurality of subscriber identity modules (111, 112), the base station comprising:

a communicator (212) configured to receive a radio resource control (RRC) message from the user equipment (100), the RRC message including a difference measurement result obtained by inter-network measurement for measuring a difference in a system frame number and a difference in a frame timing between the first network (200A) and the second network (200B) included in the plurality of networks (200A, 200B); and
a controller (214) configured to acquire the difference measurement result included in the RRC message.

11. The base station according to claim 10, wherein
the communicator (120) is configured to transmit configuration information for configuring the inter-network measurement to the user equipment (100).

12. The base station according to claim 11, wherein
the configuration information includes one or more sets of PLMN (Public Land Mobile Network) IDs and cell IDs to be an object of the inter-network measurement.

13. The base station according to claim 11, wherein
the configuration information includes information that designates a camp-on-cell in which the user equipment (100) in an RRC idle state or an RRC inactive state exists in the second network (200B) as an object of the inter-network measurement.

14. The base station according to any one of claims 11 to 13, wherein
the configuration information includes information designating that the user equipment (100) in an RRC connected state in the first network (200A) performs the inter-network measurement within a reception off period in a discontinuous reception performed for the first network (200A).

15. A communication control method performed by a user equipment (100) configured to communicate with a plurality of networks (200A, 200B) using a plurality of subscriber identity modules (111, 112), the communication control method comprising the steps of:

communicating with a base station (210A) of a first network (200A) included in the plurality of networks (200A, 200B);
performing inter-network measurement for measuring a difference in system frame number and a difference in frame timing between the first network (200A) and a second network (200B) included in the plurality of networks (200A, 200B); and
transmitting a radio resource control (RRC) message including a difference measurement result obtained by the inter-network measurement to the base station (210A).

# FIG. 1

EP 4 319 263 A1

# FIG. 2

# FIG. 3

EP 4 319 263 A1

# FIG. 4

BASE STATION

210A

COMMUNICATOR 212

211

RECEIVER 212a

TRANSMITTER 212b

CONTROLLER 214

NETWORK INTERFACE 213

EP 4 319 263 A1

# FIG. 5

EP 4 319 263 A1

INTERRUPTION OF
COMMUNICATION
(MEASUREMENT
GAP)

CAPABLE OF DATA
TRANSMISSION AND RECEPTION

INTERRUPTION OF
COMMUNICATION
(MEASUREMENT
GAP)

t1　　　　　　t2　　　　　　　　　　　　　　　　t3　　　　　　t4

UE OPERATION FOR
FIRST NETWORK

UE OPERATION FOR
SECOND NETWORK

SSB　　SSB　　・・・　　SSB　　SSB

PF/PO　　　　　　　　　　　　　　　　PF/PO

DRX CYCLE

time

## FIG. 6

BASE STATION 210A
(FIRST NETWORK 200A)

UE 100

BASE STATION 210B
(SECOND NETWORK 200B)

S101

CONFIGURATION INFORMATION
(INCLUDING PLMN ID AND CELL ID)

S102

DETERMINATION OF CELL OF SECOND NETWORK TO BE OBJECT OF
SFTD MEASUREMENT ON BASIS OF DESIGNATED PLMN ID AND CELL ID

S103

SSB (SS, MIB)

INTER-NETWORK SFTD MEASUREMENT

SSB (SS, MIB)

S104

RRC MESSAGE
(INCLUDING INTER-NETWORK SFTD MEASUREMENT RESULT)

S105

INTERRUPTION TIMING CONFIGURATION

S106

COMMUNICATION AT TIMING OTHER THAN INTERRUPTION TIMING

S107

MEASUREMENT AND/OR PAGING MONITORING OF SECOND NETWORK AT INTERRUPTION TIMING

# FIG. 7

BASE STATION 210A
(FIRST NETWORK 200A)

UE 100

BASE STATION 210B
(SECOND NETWORK 200B)

S201
CONFIGURATION INFORMATION
(INCLUDING INFORMATION FOR DESIGNATING CAMP-ON-CELL
AS MEASUREMENT OBJECT)

S202
SELF-DETERMINATION OF CELL OF SECOND
NETWORK TO BE OBJECT OF SFTD MEASUREMENT

S203
SSB (SS, MIB) → INTER-NETWORK SFTD MEASUREMENT ← SSB (SS, MIB)

S204
RRC MESSAGE
(INCLUDING INTER-NETWORK SFTD MEASUREMENT RESULT)

S205
INTERRUPTION TIMING CONFIGURATION

S206
COMMUNICATION AT TIMING OTHER THAN INTERRUPTION TIMING

S207
MEASUREMENT AND/OR PAGING MONITORING OF SECOND NETWORK AT INTERRUPTION TIMING

EP 4 319 263 A1

FIG. 8

BASE STATION 210A
(FIRST NETWORK 200A)

UE 100

BASE STATION 210B
(SECOND NETWORK 200B)

S301

| SELF-DETERMINATION OF CELL OF SECOND NETWORK TO BE OBJECT OF SFTD MEASUREMENT |

S302

SSB (SS, MIB) → | INTER-NETWORK SFTD MEASUREMENT | ← SSB (SS, MIB)

CONFIGURATION INFORMATION  S303

RRC MESSAGE  S304
(INCLUDING INTER-NETWORK SFTD MEASUREMENT RESULT)

S305

| INTERRUPTION TIMING CONFIGURATION |

S306

← COMMUNICATION AT TIMING OTHER THAN INTERRUPTION TIMING →

S307

| MEASUREMENT AND/OR PAGING MONITORING OF SECOND NETWORK AT INTERRUPTION TIMING |

EP 4 319 263 A1

# FIG. 9

**MeasObjectNR information element**

```
-- ASN1START
-- TAG-MEASOBJECTNR-START

MeasObjectNR ::=                    SEQUENCE {
    ssbFrequency                    ARFCN-ValueNR                            OPTIONAL,   -- Cond
SSBorAssociatedSSB
    ssbSubcarrierSpacing            SubcarrierSpacing                        OPTIONAL,   -- Cond
SSBorAssociatedSSB
    smtc1                           SSB-MTC                                  OPTIONAL,   -- Cond
SSBorAssociatedSSB
    smtc2                           SSB-MTC2                                 OPTIONAL,   -- Cond
IntraFreqConnected
    refFreqCSI-RS                   ARFCN-ValueNR                            OPTIONAL,   -- Cond CSI-
RS
    referenceSignalConfig           ReferenceSignalConfig,
    absThreshSS-BlocksConsolidation ThresholdNR                             OPTIONAL,   -- Need R
    absThreshCSI-RS-Consolidation   ThresholdNR                             OPTIONAL,   -- Need R
    nrofSS-BlocksToAverage          INTEGER (2..maxNrofSS-BlocksToAverage)   OPTIONAL,   -- Need R
    nrofCSI-RS-ResourcesToAverage   INTEGER (2..maxNrofCSI-RS-ResourcesToAverage)  OPTIONAL,  -- Need R
    quantityConfigIndex             INTEGER (1..maxNrofQuantityConfig),
    ...    [[
    [[
    differentNW-r17                 PLMN-Identity                            OPTIONAL    -- Need R
    ]]
}
```

# FIG. 10

**ReportConfigNR information element**

```
-- ASN1START
-- TAG-REPORTCONFIGNR-START

ReportConfigNR ::=                          SEQUENCE {
    reportType                                  CHOICE {
        periodical                                  PeriodicalReportConfig,
        eventTriggered                              EventTriggerConfig,
        ...,
        reportCGI                                   ReportCGI,
        reportSFTD                                  ReportSFTD-NR,
        condTriggerConfig-r16                       CondTriggerConfig-r16,
        cli-Periodical-r16                          CLI-PeriodicalReportConfig-r16,
        cli-EventTriggered-r16                      CLI-EventTriggerConfig-r16
    }
}


ReportSFTD-NR ::=                           SEQUENCE {
    reportSFTD-Meas                             BOOLEAN,
    reportRSRP                                  BOOLEAN,
    ...,
    [[
    reportSFTD-NeighMeas                        ENUMERATED {true}                                   OPTIONAL,    -- Need R
    drx-SFTD-NeighMeas                          ENUMERATED {true}                                   OPTIONAL,    -- Need R
    cellsForWhichToReportSFTD                   SEQUENCE (SIZE (1..maxCellSFTD)) OF PhysCellId      OPTIONAL     -- Need R
    ]],
    [
    reportSFTD-MeasDiffNW-r17                   ENUMERATED {true}                                   OPTIONAL,    -- Need R
    drx-SFTD-MeasDiffNW-r17                     ENUERATED {true}                                    OPTIONAL,    -- Need R
    cellsForWhichToReportSFTD-DiffNW-r17  SEQUENCE (SIZE (1..maxCellSFTD)) OF CellInfo-r17 OPTIONAL    -- Need R
    ]]
}

CellInfo-r17                SEQUENCE {
    plmn-Id-r17                 PLMN-Identity,
    physCellId-r17              PhysCellId
}
```

EP 4 319 263 A1

# FIG. 11

EP 4 319 263 A1

# FIG.12

## Performing measurements

The UE shall:

2> if the *reportType* for the associated *reportConfig* is set to *reportSFTD* and the *numberOfReportsSent* as defined within the *VarMeasReportList* for this *measId* is less than one:

  3> if the *reportSFTD-Meas* is set to *true:*

    …

  3> else if the *reportSFTD-NeighMeas* is included:

    …

  3> else if the reportSFTD-MeasDiffNW is included:

    Alt.1  4> if the measObject is associated to PCell:

    Alt.2  4> if the measObject is associatd to the different network

      5> if the *drx-SFTD-MeasDiffNW* is included:

        6> perform SFTD measurements between the PCell and a cell on which the UE camps in the other network, based on parameters in the associated *measObject* using available idle periods;

      5> else:

        6> perform SFTD measurements between the PCell and a cell on which the UE camps in the other network, based on parameters in the associated *measObject*;

# FIG. 13

## Measurement report triggering

2> else if the corresponding *reportConfig* includes a *reportType* set to *reportSFTD*:

  3> if the corresponding *measObject* concerns NR:

    4> if the *reportSFTD-Meas* is set to *true*:

      5> consider the NR PSCell to be applicable;

    4> else if the *reportSFTD-NeighMeas* is included:

      5> if *cellsForWhichToReportSFTD* is configured in the corresponding *reportConfig*:

        6> consider any NR neighbouring cell detected on the associated *measObjectNR* which has a physical cell identity that is included in the *cellsForWhichToReportSFTD* to be applicable;

      5> else:

        6> consider up to 3 strongest NR neighbouring cells detected based on parameters in the associated *measObjectNR* to be applicable when the concerned cells are not included in the *blackCellsToAddModList* defined within the *VarMeasConfig* for this *measId*;

    4> else if the *reportSFTD-MeasDiffNW* is included:

      5> if *cellsForWhichToReportSFTD-DiffNW* is configured in the corresponding *reportConfig*:

        6> consider any cell in the other network detected on the associated *measObjectNR* which has a physical cell identity that is included in the *cellsForWhichToReportSFTD-DiffNW* to be applicable;

      5> else:

        6> consider a cell on which the UE camps in the other network, based on parameters in the associated *measObjectNR* to be applicable;

# FIG. 14

## Measurement reporting

1> if the corresponding *measObject* concerns NR:

  2> if the *reportSFTD-Meas* is set to *true* within the corresponding *reportConfigNR* for this *measId*:

    3> set the *measResultSFTD-NR* in accordance with the following:

      4> set *sfn-OffsetResult* and *frameBoundaryOffsetResult* to the measurement results provided by lower layers;

      4> if the *reportRSRP* is set to *true*;

        5> set *rsrp-Result* to the RSRP of the NR PSCell derived based on SSB;

  2> else if the *reportSFTD-NeighMeas* is included within the corresponding *reportConfigNR* for this *measId*:

    3> for each applicable cell which measurement results are available, include an entry in the *measResultCellListSFTD-NR* and set the contents as follows:

      4> set *physCellId* to the physical cell identity of the concered NR neighbour cell.

      4> set *sfn-OffsetResult* and *frameBoundaryOffsetResult* to the measurement results provided by lower layers;

      4> if the *reportRSRP* is set to *true*:

        5> set *rsrp-Result* to the RSRP of the concerned cell derived based on SSB;

  2> else if the *reportSFTD-NeighMeasDiffNW* is included within the corresponding *reportConfigNR* for this *measId*:

    3> for each applicable cell which measurement results are available, include an entry in the *measResultCellListSFTD-NR* and set the contents as follows:

      4> set *physCellId* to the physical cell identity of the concered NR cell in the other network.

      4> set *sfn-OffsetResult* and *frameBoundaryOffsetResult* to the measurement results provided by lower layers;

# FIG. 15

BASE STATION 210A
(FIRST NETWORK 200A)

UE 100

BASE STATION 210B
(SECOND NETWORK 200B)

S401
SIB OR RRC Release
(INCLUDING MEASUREMENT TIMING CONFIGURATION)

S402
ACQUISITION OF
MEASUREMENT TIMING CONFIGURATION

S403
SSB (SS, MIB)
INTER-NETWORK
SYNCHRONIZATION DETERMINATION
SSB (SS, MIB)

S404
RRC MESSAGE
(INCLUDING INTER-NETWORK SFTD MEASUREMENT RESULT
AND MEASUREMENT TIMING CONFIGURATION)

S405
DETERMINATION OF
INTERRUPTION TIMING

S406
RRC RECONFIGURATION MESSAGE
(INCLUDING INTERRUPTION TIMING CONFIGURATION)

S407
RRC RECONFIGURATION COMPLETION MESSAGE

S408
COMMUNICATION AT TIMING OTHER THAN INTERRUPTION TIMING

S409
MEASUREMENT OF SECOND NETWORK AT INTERRUPTION TIMING

EP 4 319 263 A1

# FIG. 16

BASE STATION 210A
(FIRST NETWORK 200A)

UE 100

BASE STATION 210B
(SECOND NETWORK 200B)

S501

SIB OR RRC Release
(INCLUDING MEASUREMENT TIMING CONFIGURATION)

S502
· ACQUISITION OF MEASUREMENT TIMING CONFIGURATION
· ACQUISITION OF PAGING PARAMETER SET

S503

SSB (SS, MIB)

INTER-NETWORK SFTD MEASUREMENT

SSB (SS, MIB)

S504

RRC MESSAGE
(INCLUDING INTER-NETWORK SFTD MEASUREMENT RESULT,
MEASUREMENT TIMING CONFIGURATION, AND PAGING PARAMETER SET)

S505
DETERMINATION OF
INTERRUPTION TIMING

S506

RRC RECONFIGURATION MESSAGE
(INCLUDING INTERRUPTION TIMING CONFIGURATION)

S507

RRC RECONFIGURATION COMPLETION MESSAGE

S508

COMMUNICATION AT TIMING OTHER THAN INTERRUPTION TIMING

S509

MEASUREMENT AND PAGING MONITORING OF SECOND NETWORK AT INTERRUPTION TIMING

EP 4 319 263 A1

## INTERNATIONAL SEARCH REPORT

| International application No. |
|---|
| **PCT/JP2022/011987** |

### A. CLASSIFICATION OF SUBJECT MATTER

*H04W 24/08*(2009.01)i; *H04W 56/00*(2009.01)i; *H04W 68/12*(2009.01)i
FI: H04W56/00 110; H04W24/08; H04W68/12

According to International Patent Classification (IPC) or to both national classification and IPC

### B. FIELDS SEARCHED

Minimum documentation searched (classification system followed by classification symbols)
  H04W4/00-99/00

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/161907 A1 (NTT DOCOMO, INC.) 13 August 2020 (2020-08-13) paragraphs [0021]-[0055], fig. 2-14 | 1-15 |
| Y | WO 2021/044932 A1 (MITSUBISHI ELECTRIC CORP.) 11 March 2021 (2021-03-11) paragraphs [0117], [0128]-[0157], fig. 15 | 1-15 |
| Y | HUAWEI, HISILICON. Considerations on SFTD measurement in idle/inactive state [online]. 3GPP TSG-RAN WG2 Meeting#109-e R2-2001195. 14 February 2020 section 2 | 4-5, 7-8, 13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

| International application No.<br>**PCT/JP2022/011987** |
| --- |

| Patent document<br>cited in search report | Publication date<br>(day/month/year) | Patent family member(s) | Publication date<br>(day/month/year) |
| --- | --- | --- | --- |
| WO 2020/161907 A1 | 13 August 2020 | EP 3923640 A1<br>paragraphs [0021]-[0055], fig.<br>2-14 | |
| WO 2021/044932 A1 | 11 March 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021058630 A

**Non-patent literature cited in the description**

- Scenarios and Impact analysis for Switching Notification. *R2-2009265*
- Switching between two links for Multi-SIM. *R2-2009557*
- Discussion on switching mechanism for multi-SIM. *R2-2010350*
- Discussion on Switching Notification Procedure. *R2-2100475*